# EUROPEAN PATENT APPLICATION

(11) **EP 4 117 280 A1**
(43) Date of publication of application: **11.01.2023**
(21) Application number: 21184600.1
(22) Date of filing: 08.07.2021
(51) Int. Cl.: H04N 7/14

(54) **DEVICES, SYSTEMS AND METHODS FOR TELEPRESENCE COMMUNICATION**

(71) Applicant: DG Inception GmbH, 82110 Germering (DE)
(72) Inventor: Gurdan, Daniel, 82110 Germering (DE); Gurdan, Tobias, 82110 Germering (DE); Stumpf, Jan, 82110 Germering (DE); Achtelik, Michael, 82110 Germering (DE)
(74) Representative: Stellbrink & Partner Patentanwälte mbB

(57) **Abstract**

The present invention relates to a telepresence manikin comprising a body portion (120) shaped to resemble a miniaturized human or animal body; a head portion (110) connected to the body portion (120) and shaped to resemble a miniaturized human or animal head; wherein the head portion (110) comprises a head display area (112) configured to display an image. The present invention also relates to a telepresence communication system comprising the telepresence manikin and to a telepresence communication method utilizing the telepresence manikin.

## Description

### Field of invention

The present invention generally relates to communication devices, systems and methods. In particular, to communication devices, systems and methods for telepresence videoconferencing.

### Introduction

Telepresence refers to a set of technologies which allow a person to give the appearance of being present at a place other than their true location. Different technologies provide different levels of realism.

The simplest of such technologies is a voice call system. In such a system, the voice of a person is recorded at the true location of the person and is transmitted to another location where it is played. Examples, of such technologies includes cellular systems, landline systems, smartphones and voice-over IP (VoIP) systems.

More advanced technologies include video call systems. In such systems, not only the sound but also a video of a person is recorded at the true location of the person and is transmitted to another location where it is played. Examples of such technologies include videotelephony systems. Typically, each user stands in front of a respective screen and camera. Each user sees the other user(s) on his/her screen.

However, such prior art technologies are far from creating a real and enjoyable experience for the users. Moreover, staring into a large screen can be harmful for the user's eyes. Therefore, it is an object of the present invention to alleviate the shortcomings and drawbacks of the prior art systems.

### Summary

The present invention relates to telepresence manikins, systems comprising the telepresence manikin and methods using the telepresence manikin.

In the following, features of the present invention are discussed. For the sake of brevity, some of these features may be discussed in relation to only one of the aspects of the present invention. However, it will be understood that the following features of the present invention apply mutatis mutandis to each aspect of the present invention.

In a first aspect, the present invention relates to a telepresence manikin. The telepresence manikin comprises a body portion which is shaped to resemble a miniaturized human body or a miniaturized animal body. Connected to the body portion the telepresence manikin comprises a head portion. The head portion is shaped to resemble a miniaturized human head or a miniaturized animal head. For example, the body portion and the head portion can be shaped to resemble a cartoon version of a human body and head, respectively. Alternatively, the body portion and the head portion can be shaped to resemble a cartoon version of an animal body and head, respectively. The head portion comprises a head display area. The head display area is configured to display an image. For example, the head display area can display an image of a face of a person. It will be understood, that the image can be part of a video, for example, the image can be a frame in a video.

The telepresence manikin can be advantageous as it can provide improvements in many applications, particularly applications involving a participant communicating with another participant and/or digital assistant, such as, for example, videotelephony.

Firstly, the telepresence manikin can serve as a replacement to monitors. Typical videotelephony involves participants looking at each other by means of monitors. However, monitors can be large and can require a lot of space and energy. The telepresence manikin alleviates the need for a monitor. Thus, during an application involving a user communicating with another person (e.g., via videotelephony) or with a digital assistant, users can communicate to a "little person" on their desk instead of starring into a screen. This can make such applications more fun, more emotional and more diverse. Overall, the telepresence manikin can be more space and energy efficient compared to screens and can further improve user experience.

Secondly, an important aim in telepresence technologies is to make user experience feel as close to reality as possible. In this regard, the telepresence manikin can greatly help into achieving such an aim. More particularly, the telepresence manikin facilitates creating an immersive experience for a user, which can be perceived as being closer to reality, than simply staring to a face in a monitor.

Thirdly, long usage of monitors can be a hazard to the eyes of the user. In particular, staring to a monitor for long periods of time can cause eye strain which can manifest as fatigue or pain around the eyes, blurred vision, headache and occasional double vision. This can be particularly the case for large screens, which can occupy a large part of the field of view of the user and which can produce large amounts of light. In this regard, the telepresence manikin by alleviating the use of screens may also alleviate such negative effects to the user's health.

Furthermore, and in particular the use of multiple telepresence manikins equipped with cameras can facilitate the user providing visual clues, such as, direction. For example, when a user is participating in a telepresence communication with multiple other users, it can be difficult for the user to provide visual clues, such as, to which the user is directing his/her attention. Typically, this can be solved by the presence of multiple screens and cameras, wherein each screen shows an image of a respective other user. However, this requires large space and energy requirements. The present invention can provide multiple telepresence manikins, one for each other user. Therefore, the user when intending to speak or direct his intention to a specific other user can do so by looking at the respective manikin. The plurality of manikins requires much less space and energy then using a plurality of screens.

Similarly as above, equipping the telepresence manikins with speakers can further facilitate the user perceive the direction from where the sound is coming. This can provide another clue to the user for identifying the speaker. That is, in addition to the way the voice sounds, also the direction from where the sound came can help the user identify the speaker.

In some embodiments, the body portion can comprise a torso portion, wherein the head portion can be connected to a first side of the torso portion. The telepresence manikin can further comprise two legs protruding from a second side of the torso portion, wherein the second side is opposite to the first side. Further, the telepresence manikin can comprise two arms protruding from a third and a fourth side of the torso portion, wherein the third and the fourth side are opposite to each other. That is, the telepresence manikin can be configured to resemble the shape of a miniaturized human or of a miniaturized animal or of cartoon versions of humans or animals.

In some embodiments, universal shapes of heads and bodies of the telepresence manikin can be used. These can be utilized for displaying the face of any user. Alternatively, different shapes, styles or colors of the telepresence manikin can be used for differentiating between different users. For example, the telepresence manikin can be adapted to fit the gender and/or age of the user.

In some embodiments, the image displayed on the displayed area can be generated based on source data and/or processed source data. The source data can comprise data generated based on an output of a source image sensor pointed towards a user. For example, the source data can comprise a live video stream generated by a camera capturing the face of a user. The processed source data can comprise data generated after processing the source data. As discussed further below, the processed source data can be generated by processing the source data to only show the face of the user and/or to fit the display area. The processing of the source data to generate the processed source data may comprise at least one of cropping, scaling, rotating, wrapping and transforming. Generating the image based on the processed source data can be advantageous as it can provide a better fit of the image on the display area. The source image sensor can comprise at least one visual sensor and the source data can comprise visual data. For example, the source image sensor can comprise at least one camera.

In some embodiments, the source image sensor can comprise a visual sensor (e.g., a camera) and an audio sensor (e.g., a microphone). For example, the source image sensor can comprise integrated therein an audio-visual sensor. In such embodiments, the source data can comprise visual data and audio data, wherein the visual data and the source data are captured simultaneously or quasi-simultaneously. This can be the case, for example, when a camera with an integrated microphone is used to generate the source data, e.g., during a videotelephony.

The source image sensor can be external to the telepresence manikin. That is, the source data can be generated externally from the telepresence manikin.

The source image sensor can comprise at least one depth sensor and the source data can comprise depth data. The depth data can comprise distance information. For example, the depth sensor can comprise stereo cameras, a time-of-flight camera and/or a Lidar. The depth sensor can also be referred to as a range sensor. Capturing depth data can be advantageous as they can facilitate displaying the image, e.g., the captured face of a user, in the display are more realistically. It can also facilitate detecting features of the face of the user, such as, the cheeks, nose, eyes, lips and/or ears.

The source data can comprise at least a part of a frame of a video. Preferably, the source data comprise a video stream.

The part of the frame of the video can correspond to the head of the user in the frame. That is, the source data can at least comprise a video stream showing the head, particularly the face, of a user.

In some embodiments, the video can be generated during a videotelephony.

In general, the video can be generated during an application including a user communicating with at least one other user and/or with a digital assistant.

The user can be a participant in the videotelephony.

The image displayed on the display area can be an image of a head of a user. More particularly, the image displayed on the display area can be an image of a face of a user.

Moreover, the image can be part of a video, i.e., can be a frame in a video. In such embodiments, the display can be configured for displaying a video therein. The video can display the head, preferably the face, of a user, e.g., of a user participating in a videotelephony.

In some embodiments, the head display area can comprise a plain outer surface. That is, there can be no protrusions on the outer surface of the head display area.

In some embodiments, the head display area can be curved. This can be advantageous as it can better resemble the shape of a head or face. For example, the head display area can be a flat curved surface.

The head display area can be curved around a vertical axis. It will be understood that the vertical axis can be perpendicular to a surface supporting the telepresence manikin, when the telepresence manikin stands on the surface. The vertical axis can correspond to the axis along which the height of the telepresence manikin can be measured. The vertical axis can be parallel to the direction from the body portion to the head portion. The vertical axis can extend from "down" to "up" from the manikin's perspective.

The head display area can comprise a central angle of at least 60° and at most 180°, preferably 90°. The central angle can also be referred to as angular distance. The central angle can be defined as an angle whose apex (vertex) is the center of a circle and whose sides are radii intersecting the circle in two distinct points, wherein the portion of the circle between the two points corresponds to the curvature of the head display area. In other words, the central angle of the head display area can be an angle subtended by an arc having the same curvature as the head display area.

The head display area can comprise a maximum arc length of at least 10 mm and at most 60 mm. The head display can be narrower on the top and bottom extremes along the vertical axis and can be wider in the middle. That is, the head display area can comprise a substantially elliptic shape, with one diameter parallel with the vertical axis and with the other diameter perpendicular to the vertical axis of the telepresence manikin. The length of the diameter perpendicular to the vertical axis of the telepresence manikin can correspond to the maximum arc length.

The head display area can comprise a maximum length along the vertical axis of at least 20 mm and at most 60 mm. Continuing the above example, the maximum length along the vertical axis can correspond to the diameter of the substantially elliptic shape which can be parallel to the vertical axis of the telepresence manikin.

The head display area can be formed by an outer surface portion of the head portion.

The head display area can comprise a single color such as white. This can facilitate displaying the image therein using light projection.

That is, in some embodiments, the head display area can be configured to be illuminated by an image projector to display the image. The image projector can be an optical device that can be configured to project an image (or moving images) onto a surface, commonly a projection screen, wherein the projection screen can comprise the head display area. The image projector can create an image by shining a light through a transparent lens and/or by using lasers or LEDs. The image projector can for example be a digital video projector.

In some embodiments, the telepresence manikin or at least a frontal surface of the telepresence manikin can comprise a single color such as white.

The telepresence manikin can be configured to be illuminated by the image projector to display the image on the head display area and to change the color of the body portion. For example, a clothing item can be displayed on the body portion of the manikin for making the telepresence manikin look like it is wearing the clothing item.

Different parts of the body portion can comprise different colors upon illumination by the image projector.

A background of the telepresence manikin can either not be illuminated or can be illuminated with a color distinct from the colors of the telepresence manikin. This can facilitate increasing the saliency of the telepresence manikin and/or of the image displayed on the telepresence manikin.

In some embodiments, the telepresence manikin can be configured to facilitate calibrating the image projector with respect to the telepresence manikin. Calibrating the image projector with respect to the telepresence manikin can refer to the process of ensuring that the image projector projects the image or a corresponding part of the image on the head display area.

For example, the telepresence manikin can comprise at least one marker or at least one distinct feature that can facilitate the calibration. The use of markers can be advantageous as it can make the calibration more robust. However, the markers can be visible and distracting. Therefore, in some embodiments, the calibration can be achieved without the use of markers, as discussed further below.

While, in some embodiments the image can be displayed on the head display area using at least one image projector and projection mapping techniques, in some other embodiments the image can be displayed on the head display area using an electronic visual display.

Thus, in some embodiments, the head display area can comprise an electronic visual display configured to display the image.

The electronic visual display can be a curved screen comprising a curved viewing surface. Using a curved screen can be advantageous as it can better resemble the shape of a human or animal head.

In some embodiments, the electronic visual display can comprise multiple electronic visual displays arranged to form a curved viewing surface. That is, instead of using one electronic display which can be curved, alternatively multiple electronic visual displays can be used and can be arranged to form a curved viewing surface.

In some embodiments, the curved viewing surface can be a convex viewing surface. Again, this can be advantageous as it can better resemble the shape of a human or animal head, which are generally convex.

The electronic visual display can be a plasma display panel (PDP), a liquid-crystal display (LCD), a light emitting diode (LED) based display, an organic LED (OLED) based display and/or a quantum dot (QD) based display.

Preferably, the electronic visual display can comprise a flexible OLED display.

The electronic visual display can comprise a flexible printed circuit board (PCB) comprising red, green and blue LEDs distributed therein. Each LED can be controlled, such that they can collectively display the image.

The electronic visual display can comprise an area of at least 150 millimeter square (i.e., mm²) and at most 3000 mm².

The electronic visual display can comprise at least 25 pixels per inch, preferably at least 50 pixels per inch. In some embodiments, the electronic visual display can comprise a high pixel density, such as, above 80 pixels per inch, or above 100 pixels per inch, or above 200 pixels per inch or even above 300 pixels per inch. For example, the electronic visual display can be a retina display with a very high pixel density. A high pixel density allows the electronic visual display to display images with high resolution and clarity.

The electronic visual display can comprise a resolution of 32×32 pixels, 64×64 pixels, 96p (i.e., 128×96 pixels), 120p (i.e., 160×120 pixels), 144p (i.e., 176×144 pixels or 256×144 pixels), 180p (i.e., 320×180 pixels), 240p (i.e., 320×240 pixels or 352×240 pixels or 426×240 pixels) 360p (i.e., 480×360 pixels or 640×360 pixels), 720p (i.e., 960×720 pixels or 1280×720 pixels), 1080p, 4K and/or 8K. It will be understood that the notation AxB pixels (wherein A and B are numbers) can mean that there are B pixel rows, with each row comprising A pixels. In other words, AxB pixels can mean that the width of the electronic visual display is A pixels and the height is B pixels. In some embodiments, the electronic visual display can be rotated by 90°, meaning that the resolution can be B×A (following the a above definitions). That is, the electronic visual display can be provided or mounted to the telepresence manikin in a portrait or landscape orientation. Moreover, it will be understood that the above is not an exhaustive list and that it can merely refer to typical resolutions of the electronic visual display.

Moreover, it will be understood that the pixels in the electronic visual display may also comprise other than a matrix arrangement. That is, in some embodiments, the numbers of pixels per row or per column may be different throughout the display. Moreover, in some embodiments, the pixels may not be arranged in columns and rows, but in other arrangements, such as, in circles.

In general, the electronic visual display can comprise at least 32 and at most 4500 rows of pixels, with each row comprising at least 32 and at most 8000 pixels. Moreover, the electronic visual display can comprise any of the following aspect ratios (i.e., number of pixels per rows divided by number of rows or width divided by height): 4:3, 5:4, 3:2, 16:10, 16:9, ~17:9, ~21:9, 32:9, 1:1 and/or 4:1. Again, in some embodiments, the electronic visual display can be rotated by 90°, meaning that the above aspect ratios can be inverted.

In some embodiments, the electronic visual display can comprise a resolution of 64×64 pixels.

Alternatively, the electronic visual display can comprise a pixel density of at most 20 pixels per inch. For example, the electronic visual display can comprise sufficient pixels to display an emoji face. This can correspond to a simplified and low-cost telepresence manikin. For example, the electronic visual display can be configured to display three blobs and a line, wherein the three blobs can correspond to the eyes and nose and the line can correspond to the lips of a user. When the user speaks (or is detected speaking) the line can vibrate or change shape repetitively to indicate that the user is speaking. Alternatively, two lines can be used for the lips and when the user speak or is detected speaking the distance between the two lines can change repetitively.

That is, instead of displaying the image (or video) of a user's face on the head display area, on a simplified embodiment of the telepresence manikin an emoji face can be displayed. The emoji can display different face expressions, such as, smile, laugh, sad, mad, confused, smirk, unamused, neutral, frowning. In some embodiments, the emoji face can comprise a state indicating that the user is not speaking and a state indicating that the user is speaking. In the latter state, the portion of the emoji face indicating the lips of the user can move repetitively.

This embodiment of the telepresence manikin can be advantageous as it can be simple to manufacture and can comprise a low cost, while still providing an immersive and enjoyable experience to the user.

In some embodiments, the telepresence manikin can comprise a data communication unit configured to allow the telepresence manikin to transmit and/or receive data. It will be understood that the data communication unit can be in the singular or plural. In other words, the data communication unit may comprise multiple modules, each implementing a respective data communication protocol. The data communication unit can be configured to allow the telepresence manikin to transmit and/or receive data via a wired or wireless connection. For example, the telepresence manikin can comprise at least one socket which can facilitate creating a wired connection for data communication. For example, the telepresence manikin can comprise an ethernet, RS-232, RS-485, UART/USART and/or USB socket. Alternatively or additionally, the telepresence manikin can comprise at least one antenna which can facilities creating a wireless connection for data communication. For example, the telepresence manikin can comprise an antenna for connecting to a cellular network, WiFi, wide area network, local area network and/or a network based on any of the IEEE 802 family of standards.

The telepresence manikin can be configured to receive the source data and/or the processed source data via the data communication unit. This can be particularly advantageous in embodiments wherein the telepresence manikin comprises an electronic visual display, as it can allow the telepresence manikin to display the image. Alternatively or additionally, the data communication unit can be particularly advantageous in embodiments wherein the telepresence manikin comprises an audio generating device (e.g., a speaker) as it can allow the telepresence manikin to play an audio signal (e.g., the recorded voice of a participant in a videocall).

The telepresence manikin can be configured to receive a data signal indicative of a call request. This can be particularly advantageous as it can allow the telepresence manikin to be a stand-alone device for initiating and carrying a videocall.

The telepresence manikin can be configured to be connected for data communication with a user device by utilizing the data communication unit. The user device can be a personal computer (PC), a laptop device, a workstation, a tablet, a smartphone, a smartwatch and/or a personal digital assistant. In such embodiments, the source data and/or the processed sourced data can be communicated to the telepresence manikin via the user device. Alternatively, the processed sourced data can be generated on the user device and can be communicated to the telepresence manikin. This can be advantageous as it can alleviate the need of connecting the telepresence manikin or configuring the telepresence manikin to be connected to a global network such as the Internet or to a cellular network, typically required for a videocall. Instead, the user device can be connected to such networks.

The telepresence manikin can be configured to receive processed source data from the user device and to generate the image based on processed stored data.

The telepresence manikin can be configured to be connected for data communication with a cloud-based computing system by utilizing the data communication unit. In some embodiments, the telepresence manikin can be configured to be connected directly to the cloud-based computing system. In such embodiments, the telepresence manikin can be configured to be online. That is, the telepresence manikin can be connected to the Internet. Alternatively, the telepresence manikin can be configured to be connected indirectly to the cloud-based computing system, via the user device. More particularly, the user device can be configured to be online (i.e., to be connected to the Internet) and to therefore be connected to the cloud-based computing system and the telepresence manikin can be configured to be connected to the user device.

The telepresence manikin can be configured to receive processed source data from the cloud computing system and to generate the image based on processed source data. In other words, in some embodiments the source data can be processed on the cloud-based computing system to thereby generate the processed source data. This can be advantageous as processing the source data to generate the processed source data can be computationally complex requiring a lot of computing resources which can be provided by a cloud-based computing system. Moreover, generating the image based on processed source data can be a computationally simple process, which can be carried out with limited computational resources.

The telepresence manikin can be configured to be connected for data communication with a virtual assistant by utilizing the data communication unit. In such embodiments, the telepresence manikin can facilitate the communication between a user and a virtual or digital assistant. In such embodiments, the source data can be computer generated data.

The data communication unit can be configured to allow the telepresence manikin to be connected for data communication to a data communication network.

The telepresence manikin can comprise a data processing unit.

The data processing unit can be configured to process the source data to generate the image.

The data processing unit can be configured to process the source data to generate the processed source data and to generate the image based on the processed source data. This can be advantageous as it can further contribute on the telepresence manikin being a standalone device.

The data processing unit can be configured to exchange data with the data communication unit. More particularly, the data processing unit can send and/or receive data to/from the data communication unit.

The data processing unit can be configured to control the data communication unit. For example, the data processing unit can be configured to trigger the data communication unit to send and/or to receive data.

The data processing unit can be configured to control the electronic visual display.

The data processing unit can be configured to execute at least one image processing algorithm, that may comprise a face identification algorithm, a face-feature identification algorithm and/or an image transformation algorithm for fitting the image to a pre-determined shape.

The data processing unit can comprise at least one general processing unit, at least one central processing unit, at least one graphical processing unit, at least one digital signal processing unit, at least one hardware accelerator and/or at least one tensor processing unit.

In some embodiments, particularly in a simplified embodiment of the telepresence manikin, the data processing unit can comprise a microcontroller.

Preferably, the data processing unit can be programmable.

In some embodiments, the telepresence manikin can comprise at least one internal image sensor. The at least one internal image sensor can be a camera. This can be advantageous as it can allow the telepresence manikin to capture images, thus acting not only as a display device but also as an image capturing device.

The at least one internal image sensor and the head display area face towards the same direction. Thus, images of the face of a user can be captured while the user looks towards the head display area.

The head portion can comprise an eye portion and the at least one image sensor can be positioned on the eye portion. This can be advantageous as a user looking into the head display area, generally and instinctively looks towards a portion wherein the user expects the eyes of the manikin to be located, thus, allowing the user to look straight into the camera. As a result, the other participant in the videocall perceives the user looking directly at him/her. This can typically be a drawback on conventional videotelephony systems, wherein users look at the screen instead of at the camera.

The telepresence manikin can comprise at least one audio generating device. This can be advantageous as it can allow the telepresence manikin to play an audio recording. For example, during a videocall, not only the face of a participant in the videocall is displayed but also his voice is output by the telepresence manikin.

The telepresence manikin can comprise at least one microphone. The microphone can facilitate recording the voice of the user of the manikin.

The telepresence manikin can comprise at least one power supply port or socket. This can facilitate providing electrical energy to the telepresence manikin during operation and/or charging of a battery of the telepresence manikin.

The telepresence manikin can comprise at least one battery. This can allow mobile usage of the telepresence manikin. The at least one battery can be rechargeable and/or replaceable.

The telepresence manikin can comprise a second display area configured to display an auxiliary image.

The second display area can be formed by an outer surface portion of the body portion. Said outer portion can be different from the head display area.

The telepresence manikin can be configured to allow a releasable attachment of the second display area to the body portion and/or to the head portion.

The telepresence manikin can comprise an expandable component configured to expand thereby forming the second display area and to draw together.

The second display area can comprise any of the features of the head display area. That is, at least one of the features of the head display area can be comprised mutatis mutandis by the second display area.

The second display area can be advantageous for displaying a document and/or a shared screen shared by a participant in a videocall.

The telepresence manikin can further be configured to output calibration instructions. This can facilitate aligning the telepresence manikin with the image projector.

The telepresence manikin can be configured to output calibration instructions to a user. That is, the telepresence manikin can be configured to output the calibration instructions such that they can be perceived and comprehended by a user. For example, the calibration instructions can comprise human understandable instructions.

The calibration instructions can comprise positioning instruction for changing at least one of a position and orientation of the telepresence manikin. Typically, for the image projector to display an image on the head display area, a proper alignment between the image projector and the telepresence manikin may be required. To ensure such an alignment, the telepresence manikin may be configured to output positioning instructions. The positioning instructions can be generated by a calibrating processor, discussed in more detail further below.

The positioning instructions can comprise at least one of a type of motion, a direction of motion and an amount of motion. For example, a positioning instruction can be "Please bring me to the field of view of the projector". Another positioning instruction can be "Move me a bit to the left". Another positioning instruction can be "I'm facing the wrong way". Another positioning instruction can be "Rotate me a 90° clockwise".

The telepresence manikin can be configured to output the calibration instructions as an audio signal using the audio generating device. The audio generating device can, for example, be a speaker. The audio generating device can be external or internal to the telepresence manikin. For the former, a data communication channel (e.g., via Bluetooth) can be established between the telepresence manikin and the audio generating device. In other words, the telepresence communication can be configured to output the calibration instructions via audio. That is, the telepresence manikin can be configured to output the calibration instructions as voice commands, i.e., the telepresence manikin can "speak" the instructions. It will be understood that the audio signal can be perceived by the human ear and can comprise human understandable spoken words.

The telepresence manikin can comprise a height of at least 30 mm and at most 500 mm, preferably at least 50 mm and at most 300 mm. In some embodiments, the telepresence manikin can comprise a height of at least 90 mm and at most 150 mm. Alternatively, the telepresence manikin can comprise a heigh of at least 50 mm and at most 160 mm. It will be understood that the height of the telepresence manikin can be measured along the vertical axis of the telepresence manikin.

A ratio between the height of the head portion over the height of the body portion (120) is at least 10% and at most 70%, preferably at least 30% and at most 55%, such as 50%. Typically, the bigger the head portion in relation to the body portion, the more playful the telepresence manikin looks. This contributes to improving the user experience. In addition, a bigger head portion can provide more display area.

The head portion can comprise a height of at least 20 mm and at most 60 mm, preferably at least 27 mm and at most 45 mm. The height of the head portion can correspond to a maximum extension of the head portion along the vertical axis of the telepresence manikin.

A ratio between the width of the head portion over the height of the head portion can be at least 0.25 and at most 2, preferably at least 0.5 and at most 1.

The head portion can comprise a width of at least 20 mm and at most 60 mm, preferably at least 27 mm and at most 45 mm. The width of the head portion can correspond to a maximum extension of the head portion along a first horizontal axis that is perpendicular to the vertical axis and that is directed along the direction from left to right from the perspective of the telepresence manikin. For example, said axis can be parallel to an axis that joins a first point in one of the arms of the telepresence manikin with a symmetrical point on the other arm of the telepresence manikin. In this example, the axis of symmetry is parallel to the vertical axis.

The head portion can comprise a depth of at most 50 mm, preferably at most 20 mm. The depth of the head portion can correspond to a maximum extension along a second horizontal axis that is perpendicular to the vertical axis and to the first horizontal axis. Said axis can be parallel to the direction from the head display are to a back surface of the head portion being opposite to the head display area. Put simply, the depth of the head display area can be measured in the direction from front to back, from the perspective of the telepresence manikin.

In some embodiments, the head portion can comprise a depth of at least 0.1 mm. That is, in some embodiments, the head portion can be a thin panel shaped like a head (i.e., like a 2-dimensional head).

The head portion can be proportionally oversized with respect to the body portion. As discussed, typically an oversized head with respect to the body portion can be advantageous.

Each of the arms of the telepresence manikin can comprise a respective hand portion.

The hand portion can be proportionally oversized with respect to the arm. This can give the telepresence manikin a more playful look, hence contributing to improving the user experience.

The hand portion can comprise a length which can be at least 10% and at most 60%, preferably at least 30% and at most 60% of the total length of arm. Again, ratios which provide an oversized hand portion with respect to the arm can be preferable. The length of the hand portion can be measured along the direction at which the arms extend.

Each of the legs of the telepresence manikin can comprise a respective foot portion.

The foot portion can be proportionally oversized with respect to the leg. This can be advantageous as it can give the telepresence manikin a more playful look, hence contributing to improving the user experience. Additionally, a large foot portion can lower the center of gravity of the telepresence manikin therefore improving its stability when standing on a surface. Further still, a large foot portion can provide a large contact area between the telepresence manikin and a surface wherein the telepresence manikin can stand, therefore further improving stability of the telepresence manikin.

The foot portion can comprise a length which is at least 10% and at most 60%, preferably at least 30% and at most 60% of the total length of leg. Again, ratios which provide an oversized foot portion with respect to the legs can be preferable. The length of the foot portion can be measured along the direction at which the legs extend.

It will be understood that also the width and the depth of the foot portion can be oversized.

The torso portion can comprise a chest portion and an abdomen portion, wherein the abdomen portion can be positioned further from the head portion then the chest portion.

The abdomen portion can be proportionally oversized with respect to the chest portion. This can be advantageous as it can give the telepresence manikin a more playful look, hence contributing to improving the user experience. Additionally, an oversized abdomen portion can lower the center of gravity of the telepresence manikin therefore improving its stability when standing on a surface.

The abdomen portion can comprise a larger circumference than the chest portion.

The telepresence manikin can be configured as a stand-alone device for allowing participating in a telepresence videoconference. That is, the telepresence manikin can be configured for sending and receiving a videoconference call and for carrying a videoconference call. More particularly, in such embodiments, the telepresence manikin can be configured for online or cellular network connection and can be configured for not only displaying an image of a participant in the videoconference but for also capturing an image (or video) and for recording audio of the user of the telepresence manikin. In addition, the telepresence manikin can comprise processing means. For example, the telepresence manikin can comprise a system-on-chip. It can comprise an architecture which can be similar to the one of a computer or of a smartphone.

In some embodiments, the head display area can comprise a translucent or a fully-transparent surface and an inner display, wherein the inner display can be configured to display the image. In such embodiments, the light generated by the inner display can be guided onto a back surface of the head-display area. Moreover, the head display area comprising in such embodiments a translucent or a fully-transparent surface can allow the image to be visible when viewed from the front of the head display area.

The translucent or fully-transparent surface can be shaped like a face.

The translucent or fully-transparent surface can comprise a translucent or fully-transparent plastic.

The head display area can be translucent or transparent. In general, the head display area can be configured to provide a clear view of the image displayed by the inner display.

The inner display can be provided inside the telepresence manikin, preferably, inside the head portion. Preferably, the head display area and the inner display can be aligned with each other to make it easier to direct the light from the inner display to the head display area.

In some embodiments, the telepresence manikin can comprise a microlens array arranged between the inner display and the head display area, wherein the microlens array comprises a plurality of microlenses. The microlens array can be advantageous as it can facilitate displaying the image on the head display area such that it can appear more realistic.

The microlenses can be arranged in a pattern, such as, a two-dimensional array.

The microlens array can be configured to direct light from each pixel of the inner display onto a back surface of the head display area.

Each microlens can be configured to direct light from a respective pixel or group of neighboring pixels of the inner display onto a respective portion of a back surface of the head display area.

Each microlens can be configured to comprise it's focus point onto the respective portion of the back surface of the head display area.

The microlens array can comprise one microlens for each pixel of the inner display or one microlens for a group of neighboring pixels of the inner display area.

In some embodiments, the telepresence manikin can comprise a plurality of optical fibers, each arranged between the inner display and the head display area.

The optical fiber can be arranged in a pattern, such as, a two-dimensional array.

The plurality of optical fibers can be configured to direct light from each pixel of the inner display onto a back surface of the head display area.

Each optical fiber can be configured to direct light from a respective pixel or group of neighboring pixels of the inner display onto a respective portion of a back surface of the head display area.

The telepresence manikin can comprise one optical fiber for each pixel of the inner display or one optical fiber for a group of neighboring pixels of the inner display area.

That is, in some embodiments, the telepresence manikin can comprise an inner display, a translucent or transparent head display area and further preferably a light guider arranged between the inner display and the head display area. The light guider can be configured to direct light from the inner display area (e.g., from each pixel of the inner display area) to a back surface of the head display area. The light guider can be a microlens array or a plurality of optical fibers.

In a further aspect, the present invention relates to a telepresence communication method. The method comprises providing the telepresence manikin and displaying an image on the head display area of the telepresence manikin.

The telepresence manikin can comprise any of the above features.

The method can further comprise providing an image capturing system comprising a source image sensor and generating source data by utilizing the image capturing system.

In some embodiments, the method can comprise a first user utilizing the telepresence manikin and a second user utilizing the image capturing system. Moreover, the method can comprise pointing the source image sensor towards the second user while generating the source data. This can allow the first user and the second user to participate in a telepresence communication with each other, such as, a videocall. More particularly, the image capturing system can be utilized by the second user to capture image(s) and preferably to record audio of the second user. Images of the second user can be displayed to the first user by utilizing the telepresence manikin. Moreover, also audio of the second user can be played to the first user by utilizing an audio generating device, which can be comprised by the telepresence manikin.

Therefore, in some embodiments the method can comprise displaying the image simultaneously or quasi-simultaneously and/or in line with at least an acoustical information. Similarly, the method can comprise capturing the image simultaneously or quasi-simultaneously and/or in line with at least an acoustical information.

In some embodiments, the method can further comprise utilizing a data processing device for receiving and processing the source data and generating based thereon processed source data. The image displayed on the head display can be more easily generated from the processed source data than from the source data.

The method can further comprise establishing a data communication connection between the data processing device and the image capturing system. Therefore, the data processing device can receive the source data from the image capturing system.

The method can further comprise the image capturing system transmitting the source data to the data processing device.

The data processing device comprises at least one of an integrated circuit, a general processor, a microcontroller, an application-specific instruction-set processor, an application specific integrated circuit and a field-programmable gate array.

The method can further comprise providing a first user device.

The first user device can be a personal computer (PC), a laptop device, a workstation, a tablet, a smartphone, a smartwatch and/or a personal digital assistant.

In such embodiments, the method can comprise establishing a data communication connection between the first user device and the telepresence manikin. Therefore, the first user device can be utilized for facilitating the telepresence communication. This can be advantageous, as typically the first user device can already comprise many features which can facilitate carrying the telepresence communication.

In some embodiments, the first user device can comprise the data processing device. That is, the processing of the source data to generate the processed source data is carried out by the first user device. In such embodiments, the method can comprise the first user device transmitting the processed source data to the telepresence manikin. That is, in some embodiments, a first user device can be utilized to receive source data, process them and to generate processed source data. The processed source data can be transmitted from the first user device to the telepresence manikin. Thus, the present invention allows the utilization of user devices (which almost any user already owns) for facilitating the display of the image on the head display area.

Alternatively, the data processing device can be external to first user device. In such embodiments, the method can comprise establishing a data communication connection between the data processing device and the first user device, and the first user device receiving processed source data from the data processing device. In such embodiments, the first user device can be utilized to establish a connection with the data processing device. This can be advantageous as it alleviates the need for the telepresence manikin and/or for the image projector to be online.

The method can comprise the telepresence manikin receiving the processed source data from the first user device via the data communication unit and generating the image based on the processed sourced data. For example, the telepresence manikin can comprise an electronic visual display which can display the image based on the processed source data. Again, while it can be challenging to display the image directly from source data, it can be simpler to display the image from processed source data. Therefore, the present invention provides a data processing device (which can be comprised by a first user device or can be external to the first user device) for generating the processed source data. The latter can be transmitted to the telepresence manikin from and/or via the first user device.

In some embodiments, the method can comprise connecting the telepresence manikin for data communication to a cloud-based computing system. Typically, in such embodiments, the telepresence manikin can be configured for online connection. For example, the telepresence manikin can be configured to be connected to an IP-based network, the Internet and/or to a cellular network. This can allow the telepresence manikin to be connected to the cloud-based computing system.

The cloud-based computing system can comprise the data processing device. In other words, in some embodiments the processing of the source data to generate processed source data can be performed in a cloud-based computing system. This can be advantageous as a cloud-based computing system can provide its services for multiple users, i.e., multiple telepresence manikins can be connected to it. Moreover, the cloud-based computing system can typically comprise large computational resources and can be configured and/or maintained to efficiently carry the processing of the source data. It can also make it easier to update the processing algorithms, e.g., compared to a distributed processing system. In such embodiments, the method can comprise the cloud-based computing system transmitting the processed source data to the telepresence manikin.

Moreover, in such embodiments, the method can comprise the telepresence manikin receiving the processed source data from the cloud-based computing system via the data communication unit and generating the image based on the processed sourced data.

In some embodiments, the data processing device is the data processing unit of the telepresence manikin. That is, in some embodiments, the data processing device can be provided internally to the telepresence manikin. Put differently, in some embodiments, the telepresence manikin can comprise the data processing device.

In such embodiments, the method can comprise the telepresence manikin utilizing the data processing unit to generate the image based on the processed sourced data. This can be particularly advantageous for facilitating the use of the telepresence manikin as a standalone device for telepresence communication.

In some embodiments, the method can comprise providing an image projector and the image projector illuminating the head display area to display the image thereon. That is, in some embodiments displaying the image on the head display area of the telepresence manikin can comprise utilizing an image projector and projection mapping techniques.

In such embodiments, the method can comprise establishing a data communication connection between the data processing device and the image projector. This can allow the image projector to receive the processed source data to generate the image based thereon.

It will be understood that the direction between the data processing device and the image projector can be a direct connection or an indirect connection (i.e., via another device, such as, the first user device).

Moreover, in such embodiments, the method can comprise the image projector receiving the processed source data, generating the image based on the processed sourced data and projecting the image on the head display area. The image projector can receive the processed sourced data directly from the telepresence manikin (in embodiments wherein the telepresence manikin can comprise the data processing device) or directly from the first user device (in embodiments wherein the first user device can comprise the data processing device). In embodiments wherein the data processing device can be comprised by a cloud-based computing system, the connection between the cloud-based computing system and the image projector can be established via the first user device. In such embodiments, the telepresence manikin can receive the processed data from the cloud-based computing system via the first user device.

In some embodiments, particularly when the image projector can be utilized, the method can comprise performing a calibration process for calibrating the telepresence manikin with the image projector. The calibration process can increase alignment between the telepresence manikin and the image projector.

The method can comprise providing a calibrating camera. The calibrating camera can be configured to facilitate the calibration process. Preferably, the calibrating camera and the image projector can be positioned in close proximity to each other. Moreover, the calibrating camera and the image projector can be positioned such that they point towards similar directions.

In such embodiments, the method can comprise the image projector projecting a calibrating pattern and the calibration camera capturing at least one image of the calibration pattern. The calibration pattern can comprise a grid, rectangular and/or polygon pattern. It will be understood that any pre-determined pattern can be used.

The method can further comprise providing a calibrating processor and the calibrating processor receiving the at least one image of the calibration pattern and computing a camera-to-projector calibration parameter. The camera-to-projector calibration parameter comprises a calibration matrix. The camera-to-projector calibration parameter can be advantageous as it can allow mapping or associating a pixel of the calibrating camera with a pixel of the image projector.

The method can further comprise the calibrating processor detecting the presence, position and shape of the telepresence manikin on at least one image captured by the calibrating camera. The calibrating processor can either utilize the at least one image of the calibration pattern and/or can trigger the calibrating camera to capture at least one further image.
In some embodiments, the calibrating processor can generate at least one calibration instruction. For example, the telepresence manikin can be initially provided out of the field of view of the calibrating camera, causing the calibrating process to not detect the presence of the telepresence manikin on the image(s) captured by the calibrating camera. As such, the calibrating processor can infer that the telepresence manikin can be initially provided out of the field of view of the calibrating camera and can output a corresponding calibration instruction to mitigate this. For example, the calibration instruction can be "Please position the telepresence manikin in front of the image projector".

Similarly, in some scenarios, the telepresence manikin can be partially provided within the field of view of the calibrating camera. Again, the calibrating processor can detect this based on the image(s) of the calibrating camera and can generate and output a corresponding calibration instruction to mitigate this, such as, "Please move the manikin a bit to the left" or "Please move the manikin a bit to the right". In some embodiments, instead of non-exact quantitative terms such as "a bit", more exact terms such as "1 palm" or "10 cm" can be used to indicate quantities in the instructions. While the more exact terms such as "10 cm" may increase accuracy, they can comprise the drawback of making the instructions hard to follow by users. On the other hand, less exact terms, such as "a bit", "1 palm" or"1 manikin height" can make the instructions easier to follow by the user, as no extra tool may be required.

Similarly, the telepresence manikin can be provided such that the head display area does not face the image projector. Again, the calibrating processor can detect this based on the image(s) captured by the calibrating camera and can generate and output a corresponding calibration instruction to mitigate this, such as, "Please rotate the manikin clockwise" or "Please rotate the manikin anticlockwise".

The calibrating processor can generate the calibration instructions such that the telepresence manikin can be positioned and oriented according to a target pose. The target pose can be advantageous for the image projector to project the image on the head display area. The target pose can for example comprise the telepresence manikin facing the image projector at a preferred distance from the image projector.

The calibrating processor can compute the target pose based on at least one image captured by the calibrating camera and further optionally based on the camera-to-projector calibration parameter.

Detecting the presence, position and shape of the telepresence manikin can comprise executing an image recognition algorithm and/or a trained neural network algorithm.

The method can comprise the calibrating processor inferring the position of at least one feature of the telepresence manikin on the at least one image captured by the calibrating camera based on the detected position of the telepresence manikin.

The method can comprise the calibrating processor detecting the presence, position and shape of at least one feature of the telepresence manikin on the at least one image captured by the calibrating camera.

The at least one feature of the telepresence manikin can comprise the head display area.

Detecting the presence, position and shape of at least one feature of the telepresence manikin comprises executing an image recognition algorithm and/or a trained neural network algorithm.

The method can further comprise the calibrating processor refining the inferred position of the at least one feature of the telepresence manikin by utilizing the detected position of the at least one feature of the telepresence manikin. A refined position of the at least one feature of the telepresence manikin (e.g., of the head display area) can be advantageous as it can increase the accuracy of alignment between the head display area and the image projector.

The method can comprise storing at least one of the detected positions of the telepresence manikin, the detected shape of the telepresence manikin, the inferred position of the at least one feature of the telepresence manikin, the detected position of the at least one feature of the telepresence manikin, the detected shape of the at least one feature of the telepresence manikin, the refined position of the at least one feature of the telepresence manikin.

The image projector can project the image on the head display area based on the camera-to-projector calibration parameter and further based on at least one of the detected position of the telepresence manikin), the detected shape of the telepresence manikin (100), the inferred position of the at least one feature of the telepresence manikin (100), the detected position of the at least one feature of the telepresence manikin (100), the detected shape of the at least one feature of the telepresence manikin (100), the refined position of the at least one feature of the telepresence manikin (100).

In some embodiments, the data processing device can comprise the calibrating processor. That is, the data processing device can further be configured to carry out the calibration process as discussed above.

Moreover, it will be understood that the calibration method discussed above can be independent from the telepresence communication method. That is, the above steps of the calibration process can be carried out independently as a calibration method for calibrating the telepresence manikin with the image projector.

In some embodiments, the step of the data processing device receiving and processing the source data and generating based thereon processed source data can comprise the data processing device processing the source data by executing a face identification algorithm thereby detecting the presence and position of at least one face on the source data.

Executing a face identification algorithm can comprise executing a pre-trained neural network algorithm.

The source data can comprise a video and wherein the video can comprise a plurality of frames.

The method can comprise the data processing device processing every frame of the source data. Alternatively, the method can comprise the data processing device processing every Nth frame of the source data, wherein N is a natural number.

In some embodiments, the method can comprise the data processing device processing the source data by executing a face-feature identification algorithm, thereby detecting the presence and position of at least one face feature on the source data. The at least one face feature can comprise cheeks, nose, eyes, chin, mouth and/or outer edges of the face. The detection of the at least one face feature can increase the accuracy of detecting at least one face on the source data.

The step of the data processing device generating processed source data can comprise the data processing device generating face source data based on the detected position of the face and/or face features on the source data. The face source data can comprise only a portion of the source data corresponding to the detected face.

In some embodiments, the processed source data can comprise the face source data.

Generating the face source data can comprise executing a cropping function. That is, after detecting at least one face on the source data, the source data can be cropped to include the at least one face.

In some embodiments, the method can comprise the data processing device receiving an input shape and transforming the face source data to fit the input shape thereby generating transformed face source data. The transforming can comprise at least one of scaling, flipping, rotating and wrapping.

The processed source data can comprise the transformed face source data.

The input shape can be indicative of the shape of the head display area. Thus, displaying the image on the head display area can comprise generating the image based on the transformed face source data (which in this case can be transformed to fit the shape of the head display area).

The input shape can comprise at least one of the detected shapes of the telepresence manikin and/or the detected shape of the at least one feature of the telepresence manikin, both of which can be detected during the calibration process discussed above.

The source image sensor can comprise at least one visual sensor and generating the source data can comprise capturing visual data with the at least one visual sensor.

The source image sensor can comprise at least one depth sensor and generating the source data comprises capturing depth data with the at least one depth sensor.

The source image sensor can comprise at least one microphone and generating the source data can comprise capturing audio data with the at least one microphone. In such embodiments, the method can further comprise capturing the audio data and the visual data simultaneously or quasi-simultaneously to generate the source data.

In some embodiments, the method can comprise providing a second image capturing system comprising a source image sensor and generating second source data by utilizing the second image capturing system. Further the method can comprise providing a second telepresence manikin and displaying a second image on the head display area of the second telepresence manikin wherein the second image can be generated based on the second source data.

The second telepresence manikin can be configured as discussed above.

In such embodiments, the method can comprise the second user utilizing the second telepresence manikin and the first user utilizing the second image capturing system.

More particularly, the method can comprise pointing the second source image sensor towards the first user to generate the second source data.

In some embodiments, the telepresence manikin comprises the second source image sensor.

Similarly, the second telepresence manikin comprises the source image sensor.

That is, each telepresence manikin comprises a respective source image sensor.

It will be understood, that features discussed with respect to the telepresence manikin apply mutatis mutandis to the second telepresence manikin.

The above discussed method steps can be computer implemented.

In a further aspect, the present invention relates to a telepresence communication system comprising an image capturing system comprising a source image sensor, wherein the image capturing system is configured to generate source data and the telepresence manikin. The head display area is configured to display an image generated based on the source data. The telepresence manikin of the system can comprise any of the above discussed features of the telepresence manikin.

The telepresence communication system can be configured to carry out the telepresence communication method. It will be understood, that the description of the telepresence communication method applies mutatis mutandis to the telepresence communication system and vice versa.

The invention is further described with the following numbered embodiments.

Below device embodiments will be discussed. These embodiments are abbreviated by the letter "A" followed by a number. Whenever reference is made to device embodiments, these embodiments are meant.
A1. A telepresence manikin (100) comprising
   a body portion (120) shaped to resemble a miniaturized human or animal body;
   a head portion (110) connected to the body portion (120) and shaped to resemble a miniaturized human or animal head;
   wherein the head portion (110) comprises a head display area (112) configured to display an image.
A2. A telepresence manikin according to any of the preceding embodiments, wherein the body portion (120) comprises a torso portion (122), wherein the head portion (110) is connected to a first side of the torso portion (122).
A3. A telepresence manikin according to the preceding embodiment, wherein the telepresence manikin comprises two legs (126) protruding from a second side of the torso portion (122), wherein the second side is opposite to the first side.
A4. A telepresence manikin according to any of the 2 preceding embodiments, wherein the telepresence manikin (100) comprises two arms (124) protruding from a third and a fourth side of the torso portion (122), wherein the third and the fourth side are opposite to each other.
A5. A telepresence manikin according to any of the preceding embodiments, wherein the image is generated based on source data and/or processed source data, wherein
   the source data comprises data generated based on an output of a source image sensor (350) pointed towards a user and
   the processed source data comprises data generated after processing the source data.
A6. A telepresence manikin according to the preceding embodiment, wherein the source image sensor (350) comprises at least one visual sensor (350) and the source data comprises visual data.
A7. A telepresence manikin according to any of the 2 preceding embodiments, wherein the source image sensor (350) is external to the telepresence manikin (100).
A8. A telepresence manikin according to any of the 3 preceding embodiments, wherein the source image sensor (350) comprises at least one depth sensor and the source data comprises depth data.
A9. A telepresence manikin according to any of the 4 preceding embodiments, wherein the source data comprise at least a part of a frame of a video.
A10. A telepresence manikin according to the preceding embodiment, wherein the part of the frame of the video corresponds to the head of the user in the frame.
A11. A telepresence manikin according to any of the 2 preceding embodiments, wherein the video is generated during a videotelephony.
A12. A telepresence manikin according to the 3 preceding embodiments, wherein the user is a participant in the videotelephony.
A13. A telepresence manikin according to any of the preceding embodiments, wherein the image is an image of a head of a user.
A14. A telepresence manikin according to any of the preceding embodiments, wherein the head display area (112) comprises a plain outer surface.
   That is, the outer surface of the head display area (112) comprises no protrusions.
A15. A telepresence manikin according to any of the preceding embodiments, wherein the head display area (112) is curved.
A16. A telepresence manikin according to any of the preceding embodiments, wherein the head display area (112) is curved around a vertical axis.
   The vertical axis can be perpendicular to a surface supporting the telepresence manikin (100), when the telepresence manikin (100) stands on the surface. The vertical axis can correspond to the axis along which the height of the telepresence manikin (100) can be measured. The vertical axis can be parallel to the direction from the body portion (120) to the head portion (110). The vertical axis can extend from "down" to "up" from the manikin's perspective.
A17. A telepresence manikin according to any of the preceding embodiments, wherein the head display area (112) comprises a central angle of at least 60° and at most 180°, preferably 90°.
A18. A telepresence manikin according to any of the preceding embodiments, wherein the head display area (112) comprises a maximum arc length of at least 10 mm and at most 60 mm.
A19. A telepresence manikin according to any of the preceding embodiments, wherein the head display area (112) comprises a maximum length along the vertical axis of at least 20 mm and at most 60 mm.
A20. A telepresence manikin according to any of the preceding embodiments, wherein the head display area (112) is formed by an outer surface portion of the head portion (110).
A21. A telepresence manikin according to any of the preceding embodiments, wherein the head display area (112) comprises a single color such as white.
A22. A telepresence manikin according to any of the preceding embodiments, wherein the head display area (112) is configured to be illuminated by an image projector to display the image.
A23. A telepresence manikin according to any of the preceding embodiments, wherein manikin comprises a single color such as white.
A24. A telepresence manikin according to the preceding 2 embodiments, wherein the telepresence manikin (100) is configured to be illuminated by the image projector to display the image on the head display area (112) and to change the color of the body portion (120).
A25. A telepresence manikin according to the preceding embodiment, wherein different parts of the body portion (120) comprise different colors upon illumination by the image projector.
A26. A telepresence manikin according to embodiments A22, wherein a background of the telepresence manikin (100) is either not illuminated or illuminated with a color distinct from the colors of the telepresence manikin (100).
A27. A telepresence manikin according to any of the preceding embodiment and with the features of embodiments A22, wherein the telepresence manikin (100) is configured to facilitate calibrating the image projector with respect to the telepresence manikin (100).
A28. A telepresence manikin according to any of the preceding embodiments, wherein the head display area (112) comprises an electronic visual display (260) configured to display the image.
A29. A telepresence manikin according to the preceding embodiment, wherein the electronic visual display (260) is a curved screen comprising a curved viewing surface.
A30. A telepresence manikin according to the penultimate embodiment, wherein the electronic visual display (260) comprises multiple electronic visual displays (260) arranged to form a curved viewing surface.
A31. A telepresence manikin according to any of the 2 preceding embodiments, wherein the curved viewing surface is a convex viewing surface.
A32. A telepresence manikin according to any of the 4 preceding embodiments, wherein the electronic visual display (260) is one of a plasma display panel (PDP), a liquid-crystal display (LCD), a light emitting diode (LED) based display, an organic LED (OLED) based display and a quantum dot (QD) based display.
A33. A telepresence manikin according to any of the 5 preceding embodiments, wherein the electronic visual display (260) comprises a flexible OLED display.
A34. A telepresence manikin according to any of the 6 preceding embodiments, wherein the electronic visual display (260) comprises a flexible printed circuit board (PCB) comprising red, green and blue LEDs distributed therein.
A35. A telepresence manikin according to any of the 7 preceding embodiments, wherein the electronic visual display (260) comprises an area of at least 150 mm² and at most 3000 mm².
A36. A telepresence manikin according to any of the 8 preceding embodiments, wherein the electronic visual display (260) comprises at least 25 pixels per inch, preferably at least 50 pixels per inch.
A37. A telepresence manikin according to any of the 9 preceding embodiments and without the features of the preceding embodiments, wherein the electronic visual display (260) comprises a pixel density of at most 20 pixels per inch.
A38. A telepresence manikin according to any of the preceding embodiments, further comprising a data communication unit (240) configured to allow the telepresence manikin (100) to transmit and/or receive data.
A39. A telepresence manikin according to the preceding embodiment and embodiment A5, wherein the telepresence manikin (100) is configured to receive the source data and/or the processed source data via the data communication unit (240).
A40. A telepresence manikin according to any of the 2 preceding embodiments, wherein the telepresence manikin (100) is configured to receive a data signal indicative of a call request.
A41. A telepresence manikin according to any of 3 the preceding embodiments, wherein the telepresence manikin (100) is configured to be connected for data communication with a user device by utilizing the data communication unit (240).
A42. A telepresence manikin according to the preceding embodiment, wherein the user device is a personal computer (PC), a laptop device, a workstation, a tablet, a smartphone, a smartwatch and/or a personal digital assistant.
A43. A telepresence manikin according to the preceding embodiment and with the features of embodiment A5, wherein the telepresence manikin (100) is configured to receive processed source data from the user device and to generate the image based on processed stored data.
A44. A telepresence manikin according to any of the 6 preceding embodiments, wherein the telepresence manikin (100) is configured to be connected for data communication with a cloud-based computing system by utilizing the data communication unit (240).
A45. A telepresence manikin according to the preceding embodiment and with the features of embodiment A5, wherein the telepresence manikin (100) is configured to receive processed source data from the cloud computing system and to generate the image based on processed source data.
A46. A telepresence manikin according to any of the 8 preceding embodiments, wherein the telepresence manikin (100) is configured to be connected for data communication with a virtual assistant by utilizing the data communication unit (240).
A47. A telepresence manikin according to any of the 9 preceding embodiments, wherein the data communication unit (240) is configured to allow the telepresence manikin (100) to be connected for data communication to a data communication network.
A48. A telepresence manikin according to any of the preceding embodiments, wherein the telepresence manikin (100) comprises a data processing unit (220).
A49. A telepresence manikin according to the preceding embodiment and embodiment A5, wherein the data processing unit (220) is configured to process the source data to generate the image.
A50. A telepresence manikin according to any of the 2 preceding embodiments and embodiment A5, wherein the data processing unit (220) is configured to process the source data to generate the processed source data and to generate the image based on the processed source data.
A51. A telepresence manikin according to any of the 3 preceding embodiments and with the features of embodiment A38, wherein the data processing unit (220) is configured to exchange data with the data communication unit (240).
A52. A telepresence manikin according to any of the 4 preceding embodiments and with the features of embodiment A38, wherein the data processing unit (220) is configured to control the data communication unit (240).
A53. A telepresence manikin according to any of the 5 preceding embodiments and with the features of embodiment A28, wherein the data processing unit (220) is configured to control the electronic visual display (260).
A54. A telepresence manikin according to any of the 6 preceding embodiments, wherein the data processing unit (220), is configured to execute at least one image processing algorithm.
A55. A telepresence manikin according to any of the 7 preceding embodiments, wherein the data processing unit (220) comprises at least one general processing unit, at least one central processing unit, at least one graphical processing unit, at least one digital signal processing unit, at least one hardware accelerator and/or at least one tensor processing unit.
A56. A telepresence manikin according to any of the 8 preceding embodiments, wherein the data processing unit (220) comprises a microcontroller.
A57. A telepresence manikin according to any of the 9 preceding embodiments, wherein the data processing unit (220) is programmable.
A58. A telepresence manikin according to any of the preceding embodiments, wherein the telepresence manikin (100) comprises at least one internal image sensor (210).
A59. A telepresence manikin according to the preceding embodiment, wherein the at least one internal image sensor (210) is a camera.
A60. A telepresence manikin according to any of the 2 preceding embodiments, wherein the at least one internal image sensor (210) and the head display area (112) face towards the same direction.
A61. A telepresence manikin according to any of the 3 preceding embodiments, wherein the head portion (110) comprises an eye portion, and wherein the at least one image sensor is positioned on the eye portion.
A62. A telepresence manikin according to any of the preceding embodiments, wherein the telepresence manikin (100) comprises at least one audio generating device (270).
A63. A telepresence manikin according to any of the preceding embodiments, wherein the telepresence manikin (100) comprises at least one microphone.
A64. A telepresence manikin according to any of the preceding embodiments, wherein the telepresence manikin (100) comprises at least one power supply port.
A65. A telepresence manikin according to any of the preceding embodiments, wherein the telepresence manikin (100) comprises at least one battery.
A66. A telepresence manikin according to the preceding embodiment, wherein the at least one battery is rechargeable and/or replaceable.
A67. A telepresence manikin according to any of the preceding embodiments, wherein the telepresence manikin (100) comprises a second display area configured to display an auxiliary image.
A68. A telepresence manikin according to the preceding embodiments, wherein the second display area is formed by an outer surface portion of the body portion (120).
A69. A telepresence manikin according to the penultimate embodiment, wherein the telepresence manikin (100) is configured to allow a releasable attachment of the second display area to the body portion (120) and/or to the head portion (110).
A70. A telepresence manikin according to embodiment A67, wherein the telepresence manikin (100) comprises an expandable component configured to expand thereby forming the second display area and to draw together.
A71. A telepresence manikin according to any of the 4 preceding embodiments, wherein the second display area comprises any of the features of the head display area (112).
   That is, at least one of the features of the head display area (112) can be comprised mutatis mutandis by the second display area.
A72. A telepresence manikin according to any of the preceding embodiments, further configured to output calibration instructions.
A73. A telepresence manikin according to the preceding embodiment, wherein the telepresence manikin is configured to output calibration instructions to a user.
A74. A telepresence manikin according to the preceding embodiment, wherein the calibration instructions comprise human understandable instructions.
A75. A telepresence manikin according to any of the 3 preceding embodiments, wherein the calibration instructions comprise positioning instructions for changing at least one of a position and orientation of the telepresence manikin.
A76. A telepresence manikin according to the preceding embodiment, wherein the positioning instructions comprise at least one of a type of motion, a direction of motion and an amount of motion.
A77. A telepresence manikin according to any of the 3 preceding embodiments and with the features of embodiment A62, wherein the telepresence manikin is configured to output the calibration instructions as an audio signal using the audio generating device (270).
A78. A telepresence manikin according to any of the preceding embodiments, wherein the telepresence manikin (100) comprises a height of at least 30 mm and at most 500 mm, preferably at least 50 mm and at most 300 mm, more preferably
   at least 90 mm and at most 150 mm or
   at least 50 mm and at most 160 mm.
A79. A telepresence manikin according to any of the preceding embodiments, wherein a ratio between the height of the head portion (110) over the height of the body portion (120) is at least 10% and at most 70%, preferably at least 30% and at most 55%, such as 50%. A80. A telepresence manikin according to any of the preceding embodiments, wherein the head portion (110) comprises a height of at least 20 mm and at most 60 mm, preferably at least 27 mm and at most 45 mm.
A81. A telepresence manikin according to any of the preceding embodiments, wherein a ratio between the width of the head portion (110) over the height of the head portion (110) is at least 0.25 and at most 2, preferably at least 0.5 and at most 1.
A82. A telepresence manikin according to any of the preceding embodiments, wherein the head portion (110) comprises a width of at least 20 mm and at most 60 mm, preferably at least 27 mm and at most 45 mm.
A83. A telepresence manikin according to any of the preceding embodiments, wherein the head portion (110) comprises a depth of at most 50 mm, preferably at most 20 mm.
A84. A telepresence manikin according to any of the preceding embodiments, wherein the head portion (110) comprises a depth of at least 0.1 mm.
A85. A telepresence manikin according to any of the preceding embodiments, wherein the head portion (110) is proportionally oversized with respect to the body portion (120).
A86. A telepresence manikin according to any of the preceding embodiments and with the features of embodiment A4, wherein each of the arms (124) comprises a respective hand portion (1240).
A87. A telepresence manikin according to the preceding embodiment, wherein the hand portion (1240) is proportionally oversized with respect to the arm (124).
A88. A telepresence manikin according to any of the 2 preceding embodiments, wherein the hand portion (1240) comprises a length which is at least 10% and at most 60%, preferably at least 30% and at most 60% of the total length of arm (124).
A89. A telepresence manikin according to any of the preceding embodiments and with the features of embodiment A3, wherein each of the legs (126) comprises a respective foot portion (1260).
A90. A telepresence manikin according to the preceding embodiment, wherein the foot portion (1260) is proportionally oversized with respect to the leg (126).
A91. A telepresence manikin according to the preceding embodiment, wherein the foot portion (1260) comprises a length which is at least 10% and at most 60%, preferably at least 30% and at most 60% of the total length of leg (124).
A92. A telepresence manikin according to any of the preceding embodiment and with the features of embodiment A2, wherein the torso portion (122) comprises a chest portion and an abdomen portion, wherein the abdomen portion is positioned further from the head portion (110) then the chest portion.
A93. A telepresence manikin according to the preceding embodiment, wherein the abdomen portion is proportionally oversized with respect to the chest portion.
A94. A telepresence manikin according to any of the 2 preceding embodiments, wherein the abdomen portion comprises a larger circumference than the chest portion.
A95. A telepresence manikin according to any of the preceding embodiments, wherein the telepresence manikin (100) is configured as a stand-alone device for allowing participating in a telepresence videoconference.
A96. A telepresence manikin according to any of the preceding embodiments, wherein the head display area (112) comprises a translucent or a fully-transparent surface and an inner display, wherein the inner display is configured to display the image.
A97. A telepresence manikin according to the preceding embodiment, wherein the translucent or fully-transparent surface is shaped like a face.
A98. A telepresence manikin according to any of the 2 preceding embodiments, wherein the translucent or fully-transparent surface comprises a translucent or fully-transparent plastic.
A99. A telepresence manikin according to any of the 3 preceding embodiments, wherein the head display area (112) is translucent or transparent.
A100. A telepresence manikin according to any of the 3 preceding embodiments, wherein the inner display is provided inside the telepresence manikin, preferably, inside the head portion (110).
A101. A telepresence manikin according to any of the 5 preceding embodiments, wherein the telepresence manikin comprises a microlens array arranged between the inner display and the head display area, wherein the microlens array comprises a plurality of microlenses.
A102. A telepresence manikin according to the preceding embodiment, wherein the microlenses are arranged in a pattern, such as, a two-dimensional array.
A103. A telepresence manikin according to any of the 2 preceding embodiments, wherein the microlens array is configured to direct light from each pixel of the inner display onto a back surface of the head display area (112).
A104. A telepresence manikin according to any of the 3 preceding embodiments, wherein each microlens is configured to direct light from a respective pixel or group of neighboring pixels of the inner display onto a respective portion of a back surface of the head display area (112).
A105. A telepresence manikin according to any of the 2 preceding embodiments, wherein each microlens is configured to comprise it's focus point onto the respective portion of the back surface of the head display area (112).
A106. A telepresence manikin according to any of the 5 preceding embodiments, wherein the microlens array comprises one microlens for each pixel of the inner display or one microlens for a group of neighboring pixels of the inner display area.
A107. A telepresence manikin according to any of the 11 preceding embodiments, wherein the telepresence manikin comprises a plurality of optical fibers, each arranged between the inner display and the head display area (112).
A108. A telepresence manikin according to the preceding embodiment, wherein the optical fibers are arranged in a pattern, such as, a two-dimensional array.
A109. A telepresence manikin according to any of the 2 preceding embodiments, wherein plurality of optical fibers is configured to direct light from each pixel of the inner display onto a back surface of the head display area (112).
A110. A telepresence manikin according to any of the 3 preceding embodiments, wherein each optical fiber is configured to direct light from a respective pixel or group of neighboring pixels of the inner display onto a respective portion of a back surface of the head display area (112).
A111. A telepresence manikin according to any of the 4 preceding embodiments, wherein the telepresence manikin comprises one optical fiber for each pixel of the inner display or one optical fiber for a group of neighboring pixels of the inner display area.

Below system embodiments will be discussed. These embodiments are abbreviated by the letter "S" followed by a number. Whenever reference is made to system embodiments, these embodiments are meant.
S1. A telepresence communication system comprising:
   an image capturing system (310) comprising a source image sensor (350), wherein the image capturing system (310) is configured to generate source data; and a telepresence manikin (100) comprising
   a body portion (120) shaped to resemble a miniaturized human or animal body,
   a head portion (110) connected to the body portion (120) and shaped to resemble a miniaturized human or animal head,
   wherein the head portion (110) comprises a head display area (112) configured to display an image generated based on the source data.
S2. A telepresence communication system according to the preceding embodiment, wherein the telepresence manikin (100) is configured according to any of the preceding device embodiments.
S3. A telepresence communication system according to any of the preceding system embodiments, configured to be utilized for telepresence videoconferencing.
S4. A telepresence communication system according to any of the preceding system embodiments, wherein the telepresence manikin (100) is utilized by a first user and the image capturing system (310) is utilized by a second user.
S5. A telepresence communication system according to the preceding embodiment, wherein the image capturing system (310) is configured to facilitate pointing the source image sensor (350) towards the second user to generate the source data.
S6. A telepresence communication system according to any of the 2 preceding embodiments, configured to facilitate telepresence communication between the first user and the second user.
S7. A telepresence communication system according to any of the 3 preceding embodiments, wherein the first user and the second user are at different geographical locations.
S8. A telepresence communication system according to any of the preceding system embodiments, wherein the system further comprises a data processing device configured to receive and process the source data to generate processed source data.
S9. A telepresence communication system according to the preceding embodiment, wherein the data processing device and the image capturing system (310) are configured to be connected for data communication.
S10. A telepresence communication system according to the preceding embodiment, wherein the image capturing system (310) is configured to transmit the source data to the data processing device.
S11. A telepresence communication system according to any of the 3 preceding embodiments, wherein the data processing device comprises at least one of
   an integrated circuit, a general processor, a microcontroller, an application-specific instruction-set processor, an application specific integrated circuit and a field-programmable gate array.
S12. A telepresence communication system according to any of the preceding system embodiments, wherein the system further comprises a first user device.
S13. A telepresence communication system according to the preceding embodiment, wherein the first user device is a personal computer (PC), a laptop device, a workstation, a tablet, a smartphone, a smartwatch and/or a personal digital assistant.
S14. A telepresence communication system according to any of the 2 preceding embodiments, wherein the first user device and the telepresence manikin (100) are configured to be connected for data communication.
S15. A telepresence communication system according to any of the 3 the preceding embodiments and with the features of embodiment S8, wherein the first user device comprises the data processing device and is configured to transmit the processed source data to the telepresence manikin (100).
S16. A telepresence communication system according to any of the preceding embodiments S12 to S14 and with the features of embodiment S8, wherein
   the data processing device is external to first user device,
   the data processing device and the first user device are configured to be connected for data communication, and
   the first user device is configured to receive processed source data from the data processing device.
S17. A telepresence communication system according to any of the 2 preceding embodiments and with features of embodiment A38, wherein the telepresence manikin (100) is configured to receive the processed source data from the first user device via the data communication unit (240) and to generate the image based on the processed sourced data.
   That is, in some embodiments, the telepresence manikin (100) can be configured to generate the image based on processed sourced data. In such embodiments, the requirement for the telepresence manikin (100) to receive and/or to process the source data directly is alleviated.
S18. A telepresence communication system according to any of the preceding system embodiments, wherein the system further comprises a cloud-based computing system.
S19. A telepresence communication system according to the preceding embodiment and with the features of embodiment S8, wherein the cloud-based computing system comprises the data processing device.
S20. A telepresence communication system according to the preceding embodiment and with features of embodiment A38, wherein the telepresence manikin (100) is configured to receive the processed source data from the cloud-based computing system via the data communication unit (240) and to generate the image based on the processed sourced data.
   That is, in some embodiments, the telepresence manikin (100) can be configured to generate the image based on processed sourced data. In such embodiments, the requirement for the telepresence manikin (100) to receive and/or to process source data directly is alleviated.
S21. A telepresence communication system according to any of the preceding system embodiments and with features of embodiments S8 and A48,
   wherein the data processing device is the data processing unit (220) of the telepresence manikin (100).
S22. A telepresence communication system according to any of the preceding system embodiments and with features of embodiment A48,
   wherein the telepresence manikin (100) is configured to utilize the data processing unit (220) to generate the image based on the processed sourced data.
   That is, in some embodiments, the telepresence manikin (100) can be configured as a standalone device.
S23. A telepresence communication system according to any of the preceding system embodiments, further comprising an image projector configured to illuminate the head display area (112) to display the image thereon.
S24. A telepresence communication system according to the preceding embodiment and with the features of embodiment S8, wherein the data processing device and the image projector are configured to be connected for data communication.
S25. A telepresence communication system according to the preceding embodiment, wherein the image projector is configured to
   receive the processed source data,
   generate the image based on the processed sourced data and
   project the image on the head display area (112).
S26. A telepresence communication system according to any of the preceding embodiments and with the features of embodiment S23, wherein the system further comprises a calibrating camera.
S27. A telepresence communication system according to the preceding embodiment, wherein the image projector is configured to project a calibrating pattern and the calibration camera is configured to capture at least one image of the calibration pattern.
S28. A telepresence communication system according to the preceding embodiment, wherein the calibration pattern comprises a grid, rectangular and/or polygon pattern.
S29. A telepresence communication system according to any of the 2 preceding embodiments, wherein the system further comprises a calibrating processor, wherein the calibrating processor is configured to receive the at least one image of the calibration pattern and compute a camera-to-projector calibration parameter.
S30. A telepresence communication system according to the preceding embodiment, wherein the camera-to-projector calibration parameter comprises a calibration matrix.
S31. A telepresence communication system according to any of the 2 preceding embodiments, wherein the calibrating processor is further configured to detect the presence, position and shape of the telepresence manikin (100) on at least one image captured by the calibrating camera.
S32. A telepresence communication system according to the preceding embodiment, wherein the calibrating processor executes an image recognition algorithm and/or a trained neural network algorithm to detect the telepresence manikin (100).
S33. A telepresence communication system according to any of the 2 preceding embodiments, wherein the calibrating processor is configured to infer the position of at least one feature of the telepresence manikin (100) on the at least one image captured by the calibrating camera based on the detected position of the telepresence manikin (100).
S34. A telepresence communication system according to any of the 3 preceding embodiments, wherein the calibrating processor is further configured to detect the presence, position and shape of at least one feature of the telepresence manikin (100) on the at least one image captured by the calibrating camera.
S35. A telepresence communication system according to any of the 2 preceding embodiments, wherein the at least one feature of the telepresence manikin (100) comprises the head display area (112).
S36. A telepresence communication system according to any of the 2 preceding embodiments, wherein the calibrating processor executes an image recognition algorithm and/or a trained neural network algorithm to detect the at least one feature of the telepresence manikin (100).
S37. A telepresence communication system according to any of the 3 preceding embodiments and with the features of embodiment S33, wherein the calibrating processor is configured to
   refine the inferred position of the at least one feature of the telepresence manikin (100) by utilizing the detected position of the at least one feature of the telepresence manikin (100).
S38. A telepresence communication system according to any of the preceding embodiments and with the features of at least one of embodiments S31, S33, S34 and S37, wherein the calibrating processor is configured to store at least one of
   the detected position of the telepresence manikin (100),
   the detected shape of the telepresence manikin (100),
   the inferred position of the at least one feature of the telepresence manikin (100),
   the detected position of the at least one feature of the telepresence manikin (100),
   the detected shape of the at least one feature of the telepresence manikin (100),
   the refined position of the at least one feature of the telepresence manikin (100).
S39. A telepresence communication system according to any of the preceding embodiments and with the features of embodiment S29 and at least one of embodiments S31, S33, S34 and S37, wherein the image projector is configured to project the image on the head display area (112) based on the camera-to-projector calibration parameter and further based on at least one of
   the detected position of the telepresence manikin (100),
   the detected shape of the telepresence manikin (100),
   the inferred position of the at least one feature of the telepresence manikin (100),
   the detected position of the at least one feature of the telepresence manikin (100),
   the detected shape of the at least one feature of the telepresence manikin (100),
   the refined position of the at least one feature of the telepresence manikin (100).
S40. A telepresence communication system according to any of the 9 preceding embodiments and with the features of embodiment S8, wherein the data processing device comprises the calibrating processor.
S41. A telepresence communication system according to any of the preceding system embodiments and with the features of embodiment S8, wherein the data processing device is configured to receive the source data and process the source data by executing a face identification algorithm to detect the presence and position of at least one face on the source data.
S42. A telepresence communication system according to the preceding embodiment, wherein the face identification algorithm comprises a pre-trained neural network algorithm.
S43. A telepresence communication system according to any of the preceding system embodiments, wherein the source data comprise a video and wherein the video comprises a plurality of frames.
S44. A telepresence communication system according to the preceding embodiment and with the features of embodiment S41, wherein the data processing device is configured to process every frame of the source data.
S45. A telepresence communication system according to the penultimate embodiment and with the features of embodiment S41, wherein the data processing device is configured to process every N^{th} frame of the source data, wherein N is a natural number.
S46. A telepresence communication system according to any of the 6 preceding embodiments, wherein the da processing device is configured to process the source data by executing a face-feature identification algorithm to detect the presence and position of at least one face feature on the source data.
S47. A telepresence communication system according to the preceding embodiment, wherein the at least one face feature comprises cheeks, nose, eyes, chin, mouth and/or outer edges of the face.
S48. A telepresence communication system according to any of preceding system embodiments and with the features of embodiment S41 and/or S46, wherein the data processing device is configured to generate face source data based on the detected position of the face and/or face features on the source data,
   wherein the face source data comprise only a portion of the source data corresponding to the detected face.
S49. A telepresence communication system according to the preceding embodiment, wherein the processed source data comprise the face source data.
S50. A telepresence communication system according to any of the 2 preceding embodiments, wherein the data processing device is configured to execute a cropping function to generate the face source data.
S51. A telepresence communication system according to any of the 3 preceding embodiments, wherein the data processing device is configured to receive an input shape and to transform the face source data to fit the input shape to thereby generate transformed face source data.
S52. A telepresence communication system according to the preceding embodiment, wherein the processed source data comprise the transformed face source data.
S53. A telepresence communication system according to any of the 2 preceding embodiments, wherein the input shape is indicative of the shape of the head display area (112) and wherein the data processing device is configured to generate the image displayed on the head display area (112) based on the transformed face source data.
S54. A telepresence communication system according to the preceding embodiment, wherein the processed source data comprise the generated image.
S55. A telepresence communication system according to any of the 2 preceding embodiments and with the features of embodiments S31, S33, S34 and S37, wherein the input shape comprises at least one of
   the detected shape of the telepresence manikin (100),
   the detected shape of the at least one feature of the telepresence manikin (100).
S56. A telepresence communication system according to any of the preceding system embodiments, wherein the source image sensor (350) comprises at least one visual sensor and the source data comprises visual data.
S57. A telepresence communication system according to any of the preceding system embodiments, wherein the image sensor (350) comprises at least one depth sensor and the source data comprises depth data.
S58. A telepresence communication system according to any of the preceding system embodiments, wherein the source image sensor (350) comprises at least one microphone and the source data comprise audio data.
S59. A telepresence communication system according to any of the preceding system embodiments, wherein the image capturing system (310) comprises a second user device.
S60. A telepresence communication system according to the preceding embodiment, wherein the second user device is a personal computer (PC), a laptop device, a workstation, a tablet, a smartphone, a smartwatch and/or a personal digital assistant.
S61. A telepresence communication system according to any of the preceding system embodiments, wherein the system comprises
   a second image capturing system (310) comprising a second source image sensor (350), wherein the second image capturing system (310) is configured to generate second source data; and
   a second telepresence manikin (100) comprising
   a body portion (120) shaped to resemble a miniaturized human or animal body,
   a head portion (110) connected to the body portion (120) and shaped to resemble a miniaturized human or animal head,
   wherein the head portion (110) comprises a head display area (112) configured to display a second image generated based on the second source data.
S62. A telepresence communication system according to the preceding embodiment, wherein the second telepresence manikin (100) is configured according to any of the preceding device embodiments.
S63. A telepresence communication system according to any of the 2 preceding embodiments and embodiment S4, wherein the second telepresence manikin (100) is utilized by the second user and the second image capturing system (310) is utilized by the first user.
S64. A telepresence communication system according to the preceding embodiment, wherein the second image capturing system (310) is configured to allow pointing the second source image sensor (350) towards the first user to generate the second source data.
S65. A telepresence communication system according to any of the 3 preceding embodiments, wherein the telepresence manikin (100) comprises the second source image sensor (350).
S66. A telepresence communication system according to any of the 4 preceding embodiments, wherein the second telepresence manikin (100) comprises the source image sensor (350).
It will be understood, that features discussed with respect to the telepresence manikin (100) apply mutatis mutandis to the second telepresence manikin (100).
S67. A telepresence communication system according to any of the preceding system embodiments, wherein the system comprises a plurality of telepresence manikins (100), each displaying a respective image.
S68. A telepresence communication system according to the preceding embodiment, wherein the plurality of telepresence manikins (100) is utilized by the same first user.
S69. A telepresence communication system according to any of the 2 preceding embodiments, wherein the image capturing system (310) is configured to allow pointing the source image sensor (350) towards multiple second users to generate the source data,
   and wherein each telepresence manikin (100) is configured to display a respective image of a respective second user.
S70. A telepresence communication system according to the preceding embodiment and embodiment S18, wherein the image projector is configured to illuminate the head display area (112) of each telepresence manikin (100) to display the respective image thereon.

Below method embodiments will be discussed. These embodiments are abbreviated by the letter "M" followed by a number. Whenever reference is made to method embodiments, these embodiments are meant.
M1. A telepresence communication method comprising
   providing a telepresence manikin (100) comprising
   a body portion (120) shaped to resemble a miniaturized human or animal body,
   a head portion (110) connected to the body portion (120) and shaped to resemble a miniaturized human or animal head,
   wherein the head portion (110) comprises a head display area (112) configured to display an image;
   displaying an image on the head display area (112).
M2. A telepresence communication method according to the preceding embodiment, wherein the telepresence manikin (100) is configured according to any of the preceding device embodiments.
M3. A telepresence communication method according to any of the preceding method embodiments, further comprising
   providing an image capturing system (310) comprising a source image sensor (350) and
   generating source data by utilizing the image capturing system (310).
M4. A telepresence communication method according to the preceding method embodiment, wherein providing the image capturing system (310) and providing the telepresence manikin (100) comprises providing the system according to any of the preceding system embodiments.
M5. A telepresence communication method according to any of the preceding method embodiments and embodiment M3, further comprising
   a first user utilizing the telepresence manikin (100) and a second user utilizing the image capturing system (310).
M6. A telepresence communication method according to the preceding embodiment, wherein the method comprises pointing the source image sensor (350) towards the second user while generating the source data.
M7. A telepresence communication method according to any of the preceding method embodiments, wherein the method further comprises a data processing device receiving and processing the source data and generating based thereon processed source data.
M8. A telepresence communication method according to the preceding embodiment, wherein the method comprises establishing a data communication connection between the data processing device and the image capturing system (310).
M9. A telepresence communication method according to the preceding embodiment, wherein the method comprises the image capturing system (310) transmitting the source data to the data processing device.
M10. A telepresence communication method according to any of the 3 preceding embodiments, wherein the data processing device comprises at least one of
   an integrated circuit, a general processor, a microcontroller, an application-specific instruction-set processor, an application specific integrated circuit and a field-programmable gate array.
M11. A telepresence communication method according to any of the preceding method embodiments, wherein the method further comprises providing a first user device.
M12. A telepresence communication method according to the preceding embodiment, wherein the first user device is a personal computer (PC), a laptop device, a workstation, a tablet, a smartphone, a smartwatch and/or a personal digital assistant.
M13. A telepresence communication method according to any of the 2 preceding embodiments, wherein the method comprises establishing a data communication connection between the first user device and the telepresence manikin (100).
M14. A telepresence communication method according to the preceding embodiment and with the features of embodiment M7, wherein the first user device comprises the data processing device and wherein the method comprises
   the first user device transmitting the processed source data to the telepresence manikin (100).
M15. A telepresence communication method according to any of the preceding embodiments M11 to M13 and with the features of embodiment M7, wherein the data processing device is external to the first user device and wherein the method comprises
   establishing a data communication connection between the data processing device and the first user device, and
   the first user device receiving processed source data from the data processing device.
M16. A telepresence communication method according to any of the 2 preceding embodiments and with features of embodiment A38, wherein the method comprises
   the telepresence manikin (100) receiving the processed source data from the first user device via the data communication unit (240) and generating the image based on the processed sourced data.
M17. A telepresence communication method according to any of the preceding method embodiments, further comprising connecting the telepresence manikin (100) for data communication to a cloud-based computing system.
M18. A telepresence communication method according to the preceding embodiment and with the features of embodiment M7, wherein the cloud-based computing system comprises the data processing device and wherein the method comprises the cloud-based computing system transmitting the processed source data to the telepresence manikin (100).
M19. A telepresence communication method according to the preceding embodiment and with features of embodiment A38, wherein the method comprises
   the telepresence manikin (100) receiving the processed source data from the cloud-based computing system via the data communication unit (240) and generating the image based on the processed sourced data.
M20. A telepresence communication method according to any of the preceding method embodiments and with features of embodiment A48, wherein the data processing device is the data processing unit (220) of the telepresence manikin (100).
M21. A telepresence communication method according to any of the preceding method embodiments and with features of embodiment A48, wherein the method comprises
   the telepresence manikin (100) utilizing the data processing unit (220) to generate the image based on the processed sourced data.
M22. A telepresence communication method according to any of the preceding method embodiments, further comprising providing an image projector and the image projector illuminating the head display area (112) to display the image thereon.
M23. A telepresence communication method according to the preceding embodiment and with the features of embodiment M7, wherein the method comprises establishing a data communication connection between the data processing device and the image projector.
M24. A telepresence communication method according to the preceding embodiment, wherein the method comprises the image projector
   receiving the processed source data,
   generating the image based on the processed sourced data and
   projecting the image on the head display area (112).
M25. A telepresence communication method according to any of the preceding embodiments and with the features of embodiment M22, wherein the method further comprises providing a calibrating camera.
M26. A telepresence communication method according to the preceding embodiment, wherein the method comprises the image projector projecting a calibrating pattern and the calibration camera capturing at least one image of the calibration pattern.
M27. A telepresence communication method according to the preceding embodiment, wherein the calibration pattern comprises a grid, rectangular and/or polygon pattern.
M28. A telepresence communication method according to any of the 2 preceding embodiments, wherein the method further comprises providing a calibrating processor, and wherein the method comprises the calibrating processor receiving the at least one image of the calibration pattern and computing a camera-to-projector calibration parameter.
M29. A telepresence communication method according to the preceding embodiment, wherein the camera-to-projector calibration parameter comprises a calibration matrix.
M30. A telepresence communication method according to any of the 2 preceding embodiments, wherein the method comprises the calibrating processor detecting the presence, position and shape of the telepresence manikin (100) on at least one image captured by the calibrating camera.
M31. A telepresence communication method according to the preceding embodiment, wherein detecting the presence, position and shape of the telepresence manikin (100) comprises executing an image recognition algorithm and/or a trained neural network algorithm.
M32. A telepresence communication method according to any of the 2 preceding embodiments, wherein the method comprises the calibrating processor inferring the position of at least one feature of the telepresence manikin (100) on the at least one image captured by the calibrating camera based on the detected position of the telepresence manikin (100).
M33. A telepresence communication method according to any of the 3 preceding embodiments, wherein the method comprises the calibrating processor detecting the presence, position and shape of at least one feature of the telepresence manikin (100) on the at least one image captured by the calibrating camera.
M34. A telepresence communication method according to any of the 2 preceding embodiments, wherein the at least one feature of the telepresence manikin (100) comprises the head display area (112).
M35. A telepresence communication method according to any of the 2 preceding embodiments, wherein detecting the presence, position and shape of at least one feature of the telepresence manikin (100) comprises executing an image recognition algorithm and/or a trained neural network algorithm.
M36. A telepresence communication method according to any of the 3 preceding embodiments and with the features of embodiment M32, wherein the method comprises the calibrating processor
   refining the inferred position of the at least one feature of the telepresence manikin (100) by utilizing the detected position of the at least one feature of the telepresence manikin (100) .
M37. A telepresence communication method according to any of the preceding embodiments and with the features of at least one of embodiments M30, M32, M33 and M36, wherein the method comprises storing at least one of
   the detected position of the telepresence manikin (100),
   the detected shape of the telepresence manikin (100),
   the inferred position of the at least one feature of the telepresence manikin (100),
   the detected position of the at least one feature of the telepresence manikin (100),
   the detected shape of the at least one feature of the telepresence manikin (100),
   the refined position of the at least one feature of the telepresence manikin (100).
M38. A telepresence communication method according to any of the preceding embodiments and with the features of embodiment M28 and at least one of embodiments M30, M32, M33 and M36, wherein the image projector projects the image on the head display area (112) based on the camera-to-projector calibration parameter and further based on at least one of the detected position of the telepresence manikin (100),
   the detected shape of the telepresence manikin (100),
   the inferred position of the at least one feature of the telepresence manikin (100),
   the detected position of the at least one feature of the telepresence manikin (100),
   the detected shape of the at least one feature of the telepresence manikin (100),
   the refined position of the at least one feature of the telepresence manikin (100).
M39. A telepresence communication method according to any of the 9 preceding embodiments and with the features of embodiment M7, wherein the data processing device comprises the calibrating processor.
   It should be understood that the above steps of the calibration process can also be carried out independently from the rest of the steps of the telepresence calibration method, as a calibration method for a telepresence manikin and an image projector.
M40. A telepresence communication method according to any of the preceding method embodiments and with the features of embodiment M7, wherein the step of the data processing device receiving and processing the source data and generating based thereon processed source data comprises
   the data processing device processing the source data by executing a face identification algorithm thereby detecting the presence and position of at least one face on the source data.
M41. A telepresence communication method according to the preceding embodiment, wherein executing a face identification algorithm comprises executing a pre-trained neural network algorithm.
M42. A telepresence communication method according to any of the preceding method embodiments, wherein the source data comprise a video and wherein the video comprises a plurality of frames.
M43. A telepresence communication method according to the preceding embodiment and with the features of embodiment M40, wherein the method comprises the data processing device processing every frame of the source data.
M44. A telepresence communication method according to the penultimate embodiment and with the features of embodiment M40, wherein the method comprises the data processing device processing every N^{th} frame of the source data, wherein N is a natural number.
M45. A telepresence communication method according to any of the 5 preceding embodiments, wherein the method comprises the data processing device processing the source data by executing a face-feature identification algorithm thereby detecting the presence and position of at least one face feature on the source data.
M46. A telepresence communication method according to the preceding embodiment, wherein the at least one face feature comprises cheeks, nose, eyes, chin, mouth and/or outer edges of the face.
M47. A telepresence communication method according to the preceding embodiment and with the features of embodiment M40 and/or M45, wherein the step of the data processing device generating processed source data comprises
   the data processing device generating face source data based on the detected position of the face and/or face features on the source data,
   wherein the face source data comprise only a portion of the source data corresponding to the detected face.
M48. A telepresence communication method according to the preceding embodiment, wherein the processed source data comprise the face source data
M49. A telepresence communication method according to any of the 2 preceding embodiments, wherein generating the face source data comprises executing a cropping function.
M50. A telepresence communication method according to any of the 3 preceding embodiments, wherein the method comprises the data processing device receiving an input shape and transforming the face source data to fit the input shape thereby generating transformed face source data.
M51. A telepresence communication method according to the preceding embodiment, wherein the processed source data comprise the transformed face source data.
M52. A telepresence communication method according to any of the 2 preceding embodiments, wherein the input shape is indicative of the shape of the head display area (112) and wherein displaying the image on the head display area (112) comprises generating the image based on the transformed face source data.
M53. A telepresence communication method according to any of the 2 preceding embodiments and with the features of embodiments M30, M32, M33 and M36, wherein the input shape comprises at least one of
   the detected shape of the telepresence manikin (100),
   the detected shape of the at least one feature of the telepresence manikin (100).
M54. A telepresence communication method according to any of the preceding method embodiments and embodiment M3, wherein the source image sensor (350) comprises at least one visual sensor and generating the source data comprises capturing visual data with the at least one visual sensor.
M55. A telepresence communication method according to any of the preceding method embodiments and embodiment M3, wherein the source image sensor (350) comprises at least one depth sensor and generating the source data comprises capturing depth data with the at least one depth sensor.
M56. A telepresence communication method according to any of the preceding method embodiments and embodiment M3, wherein the source image sensor (350) comprises at least one microphone and generating the source data comprises capturing audio data with the at least one microphone.
M57. A telepresence communication method according to the preceding embodiment, wherein the method comprises capturing the audio data and the visual data simultaneously or quasi-simultaneously to generate the source data.
M58. A telepresence communication method according to any of the preceding method embodiments, wherein the method comprises
   providing a second image capturing system (310) comprising a source image sensor (350) and generating second source data by utilizing the second image capturing system (310); and
   providing a second telepresence manikin (100) comprising
   a body portion (120) shaped to resemble a miniaturized human or animal body,
   a head portion (110) connected to the body portion (120) and shaped to resemble a miniaturized human or animal head,
   wherein the head portion (110) comprises a head display area (112) configured to display a second image generated based on the second source data and
   displaying the second image on the head display area (112) of the second telepresence manikin (100).
M59. A telepresence communication method according to the preceding embodiment, wherein the second telepresence manikin (100) is configured according to any of the preceding device embodiments.
M60. A telepresence communication method according to any of the 2 preceding embodiments and embodiment M5, further comprising
   the second user utilizing the second telepresence manikin (100) and
   the first user utilizing the second image capturing system (310).
M61. A telepresence communication method according to the preceding embodiment, wherein the method comprises pointing the second source image sensor (350) towards the first user to generate the second source data.
M62. A telepresence communication method according to any of the 3 preceding embodiments, wherein the telepresence manikin (100) comprises the second source image sensor (350).
M63. A telepresence communication method according to any of the 4 preceding embodiments, wherein the second telepresence manikin (100) comprises the source image sensor (350).
It will be understood, that features discussed with respect to the telepresence manikin (100) apply mutatis mutandis to the second telepresence manikin (100).
M64. A telepresence communication method according to any of the preceding method embodiments, wherein the method comprises providing a plurality of telepresence manikins (100), each displaying a respective image.
M65. A telepresence communication method according to the preceding embodiment, wherein the method comprises the same first user utilizing the plurality of telepresence manikins (100).
M66. A telepresence communication method according to any of the 2 preceding embodiments and embodiment M3, wherein the method comprises pointing the source image sensor (350) towards multiple second users while generating the source data,
   and each telepresence manikin (100) displaying a respective image of a respective second user.
M67. A telepresence communication method according to the preceding embodiment and embodiment M17, wherein the method comprises
   the image projector illuminating the head display area (112) of each telepresence manikin (100) and thereby displaying the respective image thereon.
M68. The method according to any of the preceding method embodiments, wherein the method is a computer implemented method.

### Brief description of the drawings

- Figs. 1a: illustrates a telepresence manikin according to an embodiment of the present invention;
- Figs. 1b: illustrates a telepresence manikin according to another embodiment of the present invention;
- Fig. 2: illustrates with a diagram the architecture of the telepresence manikin;
- Fig. 3: illustrates a telepresence communication system according to an embodiment of the present invention;
- Fig. 4: illustrates a telepresence communication system according to another embodiment of the present invention.

### Detailed description of the drawings

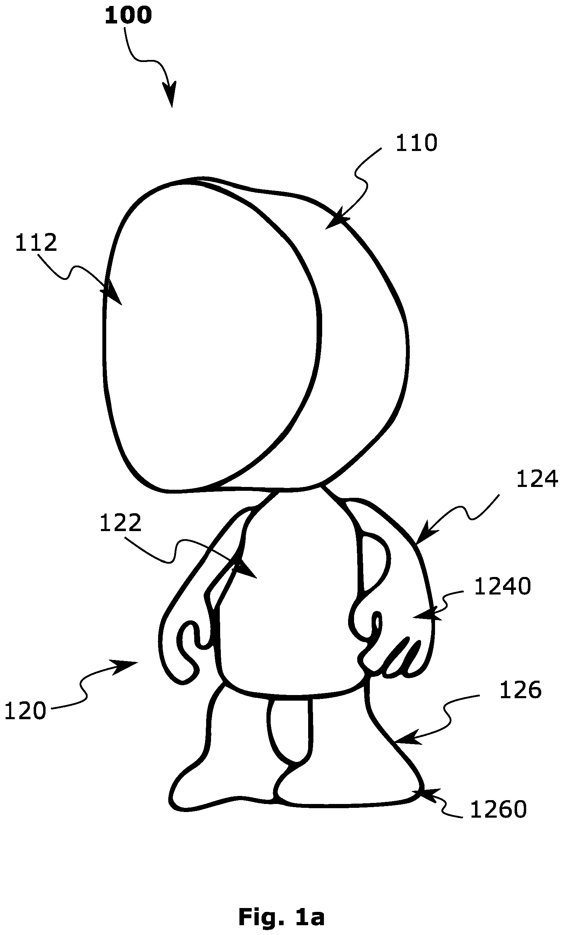

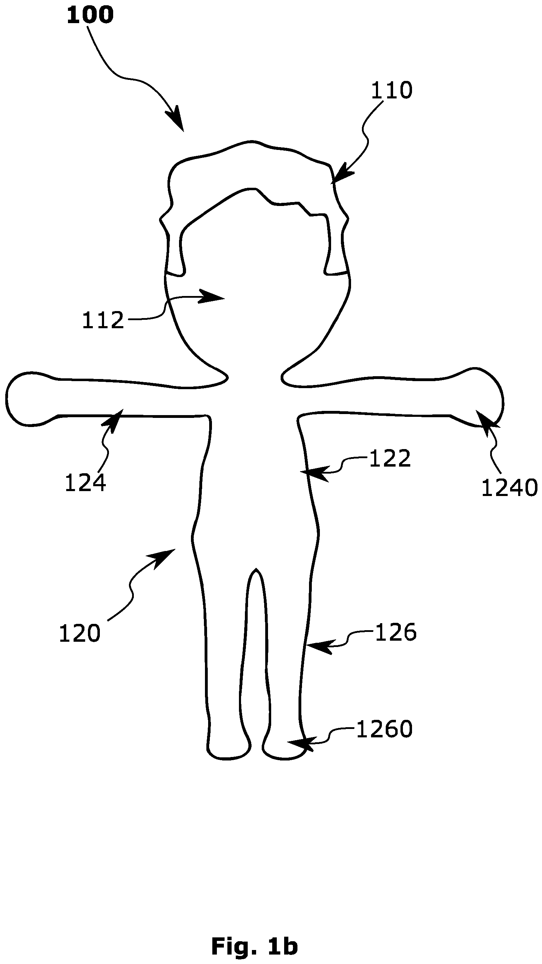

Figs. 1a and 1b show a telepresence manikin 100 that can be utilized to display an image of a person, particularly during a videocall. More particularly, Fig. 1a illustrates a telepresence manikin with oversized head, hands and feet, while Fig. 1b illustrates a telepresence manikin with typical proportions.

The telepresence manikin comprises a head portion 110 and a body portion 120. The head portion 110 and the body portion 120 are physically connected to each other. For example, the head portion 110 and the body portion 120 can be attached to each other by gluing, crimping, welding and/or fastening parts (not shown). Alternatively, the head portion 110 and the body portion 120 can be formed in one piece. That is, the telepresence manikin 100 can be formed in one piece. For example, the telepresence manikin can be manufactured based on a molding process and/or based on a 3D printing process. In a preferred embodiment, the telepresence manikin 100 can be 3D printed.

The head portion 110 can be shaped to resemble a human head. That is, the head portion 110 can comprise a miniaturized human head shape. In some embodiments, it can also be shaped to resemble an animal head (not shown). In a front part, the head portion 110 can comprise a head display area 112. For example, the head display area 112 can be positioned in a face portion of the head portion 110. Thus, the head display area 112 can be configured to resemble a human (or animal) face. Put simply, the head portion 110 can be the head of the telepresence manikin and the head display area 112 can be the face.

The body portion 120 can be shaped to resemble a human body. In some embodiments, it can also be shaped to resemble an animal body (not shown). The body portion 120 can comprise a torso portion 122, two arms 124 comprising hand portions 1240 and two legs 126 comprising foot portions 1260. The two arms 124 can be identical to each other and can extend from opposite sides of the torso portion 122. The head portion can be attached on another side of the torso portion 122. The two legs 126 can be identical to each other and can extend from the same side of the torso portion, said side being opposite to the side wherein the head portion can be attached.

The telepresence manikin 100 can be configured to stand on a surface on its two legs 126 wherein the foot portions 1260 can be in contact with the surface. In this position, the head portion 110 can be the farthest portion from the surface. The direction from the said surface to the head portion 110, can define a vertical direction. Along this direction the height of the telepresence manikin 100 and its portions can be measured. The vertical direction can also be defined as a direction parallel to a central axis of the telepresence manikin 100, said central axis being perpendicular to a surface wherein the telepresence manikin 100 stands.

In preferred embodiments, the telepresence manikin 100 can comprise a slightly deformed shape, compared to an average human shape. That is, in some embodiments the shape of the telepresence manikin 100 can comprise additional transformations to a mere shrinking of an average human shape. For example, and as illustrated in Fig. 1, the telepresence manikin 100 can comprise an oversized head portion 110, oversized hand portions 1240 and oversized foot portions 1260. This can facilitate creating a more friendly, funny and enjoyable shape of the telepresence manikin 100 which can contribute to a better user experience. Furthermore, an oversized head portion 110 can allow for a larger head display area 112, which in turn can allow displaying images of a larger size. Further still, oversized foot portions 1260 can increase stability of the telepresence manikin 110 when standing on a surface.

Similarly, the torso portion 122 can comprise a slightly deformed shape. For example, the torso portion can comprise a water drop shape, i.e., with an abdomen portion comprises a larger maximum diameter then a chest portion. In addition to creating a more friendly, funny and enjoyable shape of the telepresence manikin 100 which can contribute to a better user experience, the deformed torso portion 122 can facilitate into lowering the center of mass of the telepresence manikin, therefore increasing stability.

In some embodiments, the telepresence manikin 100 can be configured to display an image on the head display area 112. The image can preferably be an image of a face of a person.

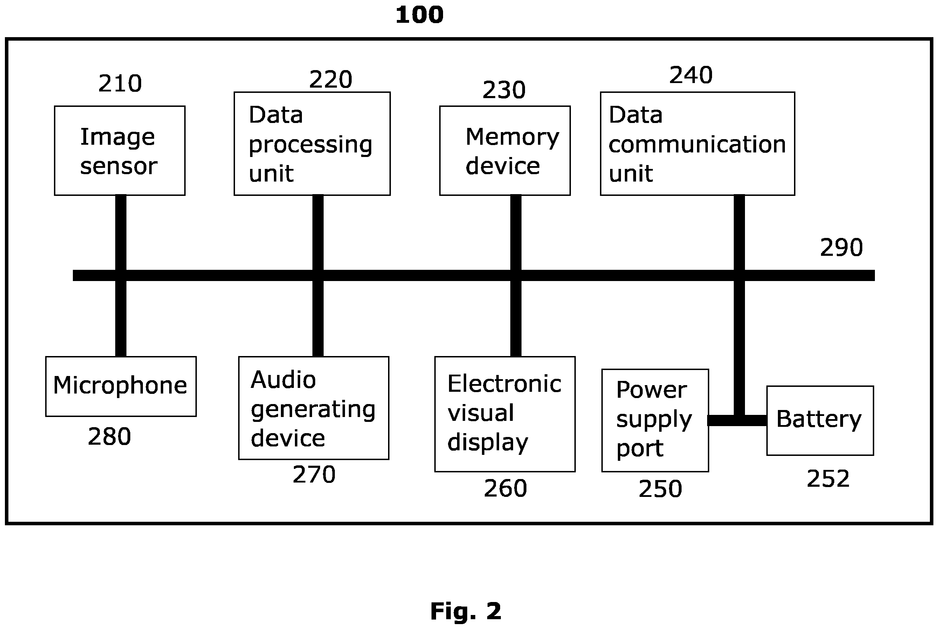

In some embodiments, the image can be displayed in the head display area 112 by utilizing an image projector. In such embodiments, the head display area 112 can be configured as a display screen. Moreover, in such embodiments, the telepresence manikin 100 can be a passive device, in that it does not execute any active actions to display the image. Further still, in such embodiments the telepresence manikin 110 can comprise a non-hollow structure, i.e., a filled structure, in particular a non-hollow body portion 120. This is due to the fact that the telepresence manikin 100 may not require further components (as discussed in Fig. 2) and therefore, there can be no need to provide space inside the telepresence manikin 100 for providing the components. Providing the telepresence manikin 110 with a non-hollow structure can generally contribute into increasing its weight and therefore the stability of the telepresence manikin 110. On the other hand, providing the body portion 120 with a non-hollow structure can contribute into lowering the center of mass of the telepresence manikin 100 and therefore increasing its stability.

In some embodiments, the telepresence manikin 100 can be configured to actively display the image in the head display area 112. In such embodiments, the head display area 112 can comprise an electronic visual display and other components as illustrated in Fig. 2.

Fig. 2 illustrates a telepresence manikin 100 comprising multiple electronic components. It will be understood that the list of electronic components illustrated in Fig. 2 is not exhaustive. It will also be understood that not all of the electronic components illustrated in Fig. 2 are compulsory. That is, some embodiments of the telepresence manikin may comprise only some or none of the electronic components illustrated in Fig. 2.

The telepresence manikin 100 can comprise a data processing unit 220. The data processing unit 220 can be configured to carry out computer instructions of a program (i.e., machine readable and executable instructions). The data processing unit 220 can be singular or plural. For example, the data processing unit 220 may comprise at least one of CPU, GPU, DSP, APU, ASIC, ASIP or FPGA.

The telepresence manikin 100 can comprise a data communication unit 240 configured to facilitate electronic data exchange between the telepresence manikin and devices or networks external to the telepresence manikin. For example, the data communication unit 240 can comprise a network interface card that can be configured to connect the telepresence manikin 100 to a network, such as, to the Internet. Alternatively or additionally, the data communication unit 240 can comprise a USB port, a Bluetooth transceiver, a WLAN transceiver and/or a LAN port. The telepresence manikin 100 can be configured to transfer electronic data using a standardized communication protocol, such as, USB, TCP-IP, Bluetooth and/or any of the IEEE 802 family of standards.

The telepresence manikin 100 can comprise an electronic visual display 260. The electronic visual display 260 can be a plasma display panel (PDP), a liquid-crystal display (LCD), a light emitting diode (LED) based display, an organic LED (OLED) based display and/or a quantum dot (QD) based display. Preferably, the electronic visual display 260 can be configured to comprise a curved viewing surface, such as, a convex viewing surface. Moreover, preferably the electronic visual display 260 can be a flexible display.

The telepresence manikin 100 can comprise an image sensor 210. The image sensor 210 can be a camera 210. For example, the telepresence manikin can comprise two image sensors 210 positioned at an eye portion (not shown) of the head display area 112. That is, the image sensors 210 can be configured as eyes of the manikin.

The telepresence manikin 100 can comprise at least one memory device 230, such as, a main memory (e.g., RAM), a cache memory (e.g., SRAM) and/or a secondary memory (e.g., HDD, SDD). The at least one memory device 230 may comprise volatile and/or non-volatile memory such an SDRAM, DRAM, SRAM, Flash Memory, MRAM, F-RAM, or P-RAM.

The telepresence manikin 100 can comprise at least one internal communication interface 290 (e.g., busses) configured to facilitate electronic data exchange between the electronic components of the telepresence manikin.

The telepresence manikin 100 can further comprise a microphone 280 and/or an audio generating device 270.

The telepresence manikin 100 can further comprise a power supply port 250 which can be configured to provide electrical energy to the telepresence manikin 100. The telepresence manikin 100 can further comprise a battery 252. Said battery 252 can be rechargeable, e.g., through the power supply port 250.

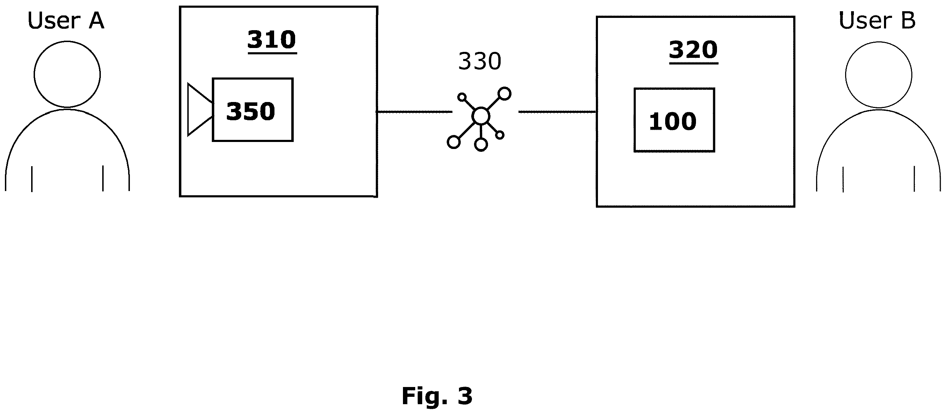

Fig. 3 illustrates a telepresence communication system according to an embodiment of the present invention. The system can allow a remote communication between a user A and a user B.

The system can comprise a telepresence manikin 100 as described above and an image capturing system 310. The image capturing system 310 can comprise a source image sensor 350 which can be pointed toward user A. The image capturing system 310 can be configured to generate source data, e.g., by capturing audio-visual data of the second user 320. Based on the source data an image can be generated and can be displayed on the head display area of the telepresence manikin 100. It will be understood that the image can be a frame of a video. That is, based on the source data a video can be displayed on the head display area of the telepresence manikin 100. Simultaneously or quasi-simultaneously with the display of the image on the head display area of the telepresence manikin 100, an audio recorded by the image capturing system 310 can be played to user B.

In some embodiments, the telepresence manikin 100 can be a standalone device. For example, in such embodiments, the telepresence manikin 100 can be configured as illustrated in Fig. 2. In such embodiments, the telepresence manikin 100 can be configured to be connected to the network 330 and to receive the source data and/or processed sourced data via the network 330.

Alternatively, the telepresence manikin 100 can be part of an image display system 320. The image display system 320 can comprise a user device (not shown), such as, a personal computer (PC), a laptop device, a workstation, a tablet, a smartphone, a smartwatch and/or a personal digital assistant. The telepresence manikin 100 and the user device can be connected for data communication. The user device can be configured to facilitate displaying the image on the telepresence manikin 100. The image display system 320 can further comprise an image projector (not shown).

It will be understood that user A can also comprise a respective image display system 320 and that user B can also comprise a respective image capturing system 310.

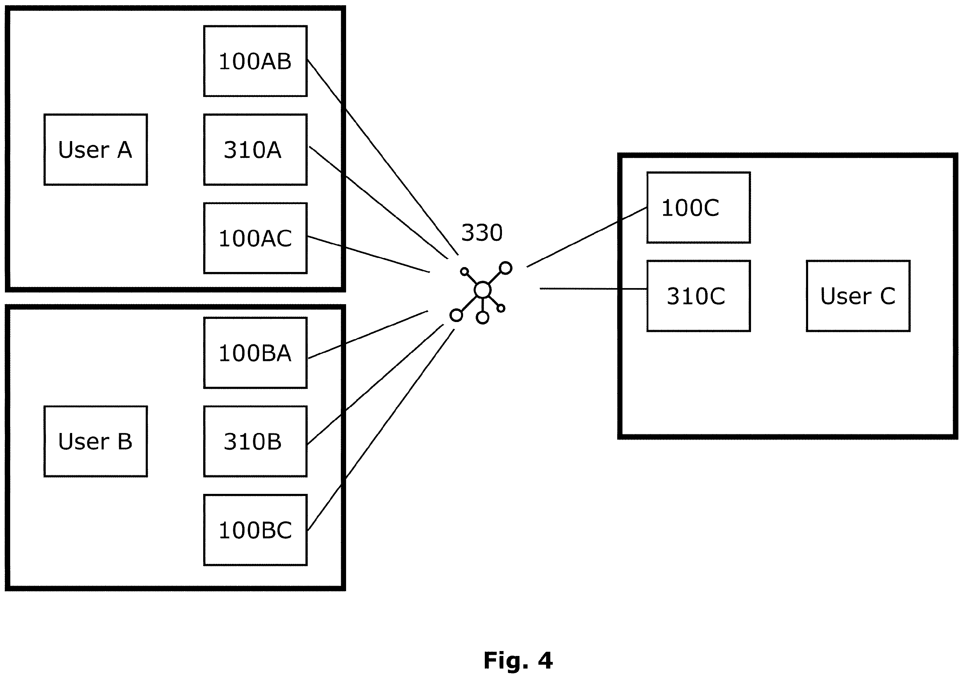

Fig. 4 illustrates the telepresence communication system of Fig. 3 configured to allow communication between more than 2 users. As illustrated, each user comprises an image capturing system 310. User A and user B comprises two telepresence manikins 100, one for displaying each other user. User C utilizes only one telepresence manikin 100C which can be configured to display user A and user B at different time slots (e.g., whenever user A or B speaks, he/she can be displayed on the manikin 100C of user C).

Whenever a relative term, such as "about", "substantially" or "approximately" is used in this specification, such a term should also be construed to also include the exact term. That is, e.g., "substantially straight" should be construed to also include "(exactly) straight". Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A telepresence manikin (100) comprising
a body portion (120) shaped to resemble a miniaturized human or animal body;
a head portion (110) connected to the body portion (120) and shaped to resemble a miniaturized human or animal head;
wherein the head portion (110) comprises a head display area (112) configured to display an image.

2. A telepresence manikin according to the preceding claim,
wherein the body portion (120) comprises a torso portion (122), wherein the head portion (110) is connected to a first side of the torso portion (122),
wherein the telepresence manikin comprises two legs (126) protruding from a second side of the torso portion (122), wherein the second side is opposite to the first side, and
wherein the telepresence manikin (100) comprises two arms (124) protruding from a third and a fourth side of the torso portion (122), wherein the third and the fourth side are opposite to each other.

3. A telepresence manikin according to any of the preceding claims,
wherein the image is generated based on source data and/or processed source data,
wherein the source data comprises data generated based on an output of a source image sensor (350) pointed towards a user and the processed source data comprises data generated after processing the source data and
wherein the source image sensor (350) comprises at least one visual sensor (350) and the source data comprises visual data.

4. A telepresence manikin according to any of the preceding claims,
wherein the head display area is formed by an outer surface portion of the head portion,
wherein the head display area (112) comprises a single color such as white and
wherein the head display area (112) is configured to be illuminated by an image projector to display the image.

5. A telepresence manikin according to any of the preceding claims, wherein the head display area (112) comprises an electronic visual display (260) configured to display the image.

6. A telepresence manikin according to any of the preceding claims, further configured to output calibration instructions, wherein the calibration instructions comprise positioning instructions for changing at least one of a position and orientation of the telepresence manikin.

7. A telepresence communication system comprising:
an image capturing system (310) comprising a source image sensor (350), wherein the image capturing system (310) is configured to generate source data; and
a telepresence manikin (100) comprising
a body portion (120) shaped to resemble a miniaturized human or animal body,
a head portion (110) connected to the body portion (120) and shaped to resemble a miniaturized human or animal head,
wherein the head portion (110) comprises a head display area (112) configured to display an image generated based on the source data.

8. A telepresence communication system according to the preceding claim,
wherein the system further comprises a data processing device configured to receive and process the source data to generate processed source data.

9. A telepresence communication system according to the preceding claim,
wherein the system further comprises a first user device,
wherein the first user device and the telepresence manikin (100) are configured to be connected for data communication,
wherein the first user device comprises the data processing device and is configured to transmit the processed source data to the telepresence manikin (100),
wherein the telepresence manikin (100) is configured to receive the processed source data from the first user device via the data communication unit (240) and to generate the image based on the processed sourced data.

10. A telepresence communication system according to any of the 2 preceding claims,
further comprising an image projector configured to illuminate the head display area (112) to display the image thereon,
wherein the data processing device and the image projector are configured to be connected for data communication and
wherein the image projector is configured to
receive the processed source data,
generate the image based on the processed sourced data and
project the image on the head display area (112).

11. A telepresence communication method comprising
providing a telepresence manikin (100) comprising
a body portion (120) shaped to resemble a miniaturized human or animal body,
a head portion (110) connected to the body portion (120) and shaped to resemble a miniaturized human or animal head, wherein the head portion (110) comprises a head display area (112) configured to display an image;
displaying an image on the head display area (112).

12. A telepresence communication method according to the preceding claim,
further comprising providing an image capturing system (310) comprising a source image sensor (350) and
generating source data by utilizing the image capturing system (310).

13. A telepresence communication method according to any of the 2 preceding claims, wherein the method further comprises a data processing device receiving and processing the source data and generating based thereon processed source data.

14. A telepresence communication method according to the preceding claim, wherein the method further comprises
providing a first user device, wherein the first user device comprises the data processing device, and
establishing a data communication connection between the first user device and the telepresence manikin (100),
the first user device transmitting the processed source data to the telepresence manikin (100),
the telepresence manikin (100) receiving the processed source data from the first user device via the data communication unit (240) and generating the image based on the processed sourced data.

15. A telepresence communication method according to any of the 2 preceding claims, further comprising
providing an image projector and the image projector illuminating the head display area (112) to display the image thereon,
establishing a data communication connection between the data processing device and the image projector, and
the image projector
receiving the processed source data,
generating the image based on the processed sourced data and
projecting the image on the head display area (112).
